# EUROPÄISCHE PATENTANMELDUNG

(11) **EP 4 806 684 A1**
(43) Veröffentlichungstag der Anmeldung: **16.09.2026**
(21) Anmeldenummer: 25162490.4
(22) Anmeldetag: 10.03.2025
(51) Int. Cl.: B60K 1/02

(54) **ANTRIEBSVORRICHTUNG, ACHSE, GETRIEBEGEHÄUSEANORDNUNG UND ARBEITSMASCHINE**

(71) Anmelder: Deere & Company, Moline, IL 61265 (US)
(72) Erfinder: MANN, MANUEL, 68163 Mannheim (DE)
(74) Vertreter: Stein, Stefan

(57) **Zusammenfassung**

Die Erfindung betrifft eine Antriebsvorrichtung für eine Arbeitsmaschine (10), umfassend einen Antrieb (52), einen Abtrieb (54), eine erste und zweite Energiemaschine (50, 56) und eine erste Übersetzungseinheit (58). Die erste Übersetzungseinheit (58) weist einen ersten und zweiten Eingang (200, 202) und einen ersten und zweiten Ausgang (204, 206) auf, wobei der Antrieb (52) mit dem Abtrieb (54) über die erste Übersetzungseinheit (58) verbindbar ist. Die erste Energiemaschine (50) ist mit dem ersten Eingang (200) durch ein erstes Schaltelement (210) verbindbar und die zweite Energiemaschine (56) ist mit dem zweiten Eingang (202) verbunden. Die Erfindung betrifft weiter eine Achse (100), eine Getriebegehäuseanordnung (700) und eine Arbeitsmaschine (10).

## Beschreibung

Die Erfindung betrifft eine Antriebsvorrichtung gemäss dem Oberbegriff des unabhängigen Anspruchs 1, eine Achse gemäss dem Oberbegriff des unabhängigen Anspruchs 12 und eine Getriebegehäuseanordnung gemäss dem Oberbegriff des unabhängigen Anspruchs 13 und eine Arbeitsmaschine gemäss dem Oberbegriff des unabhängigen Anspruchs 14.

Arbeitsmaschinen, bevorzugt Baumaschinen oder landwirtschaftliche Arbeitsfahrzeuge, besonders bevorzugt landwirtschaftliche Zugfahrzeuge oder Ackerschlepper oder Traktoren, werden üblicherweise durch Motoren angetrieben. Der Motor kann dabei eine oder mehrere Achsen oder Fahrzeugachsen der Arbeitsmaschine, insbesondere eine Hinterachse und/oder eine Vorderachse antreiben. Der Antrieb der Achse(n) erfolgt für gewöhnlich von der Kurbelwelle des Motors über ein Getriebe mit veränderbarer Übersetzung und über eines oder mehrere Differenzialgetriebe. Das oder die Differenzialgetriebe kann oder können abtriebsseitig mit den Fahrzeugachsen, insbesondere mit den Wellen der Räder, bevorzugt den Vorder- und/oder Hinterräder, in Antriebsverbindung stehen.

Ebenso kann die Arbeitsmaschine zusätzlich einen ersten Leistungsausgang, bevorzugt einen mechanische Leistungsausgang, besonders bevorzugt eine Zapfwelleneinheit aufweisen. Der erste Leistungsausgang kann sich an einer Rückseite der Arbeitsmaschine befinden, insbesondere in der Nachbarschaft einer Anbauschnittstelle für Arbeitsgeräte. Zusätzlich kann die Antriebsvorrichtung oder die Arbeitsmaschine einen zweiten Leistungsausgang, insbesondere eine weitere Zapfwelleneinheit, umfassen. Der zweite Leistungsausgang kann mit dem Antrieb verbunden sein und/oder sich an einer Vorderseite der Arbeitsmaschine befinden.

Derzeit liegen Vorschläge vor, derartige Arbeitsmaschinen durch Elektromotoren anzutreiben, insbesondere als rein batteriegetriebene Fahrzeuge. Eine fachübliche, naheliegende Vorgehensweise würde den bisherigen (mit einer in Längsrichtung verlaufenden, nunmehr jedoch elektromotorisch angetriebenen Welle und einem Differenzialgetriebe aufgebauten) Antriebsstrang auf derartige Fahrzeuge übertragen, wie in der EP 4 227 192 A1 gezeigt.

Ausgehend von diesem Stand der Technik ist es eine Aufgabe der vorliegenden Erfindung eine gegenüber dem Stand der Technik verbesserte Antriebsvorrichtung, Achse, Arbeitsmaschine und Getriebegehäuseanordnung vorzuschlagen. Im Speziellen kann es eine Aufgabe der vorliegenden Erfindung sein eine Antriebsvorrichtung und/oder eine Achse und/oder eine Arbeitsmaschine und/oder eine Getriebegehäuseanordnung vorzuschlagen, die konstruktiv einfacher und/oder kompakter und/oder modularer ausgestaltet sind und/oder elektrisch betreibbar und/oder elektrisch antreibbar sind.

Diese Aufgabe wird durch eine Antriebsvorrichtung mit den Merkmalen des Anspruchs 1 und eine Achse mit den Merkmalen des Anspruchs 12 und eine Getriebegehäuseanordnung mit den Merkmalen des Anspruchs 13 und eine Arbeitsmaschine mit den Merkmalen des Anspruchs 14 gelöst. Die abhängigen Ansprüche beziehen sich auf besonders vorteilhafte Ausführungsformen der Erfindung.

Erfindungsgemäss wird eine Antriebsvorrichtung für eine Arbeitsmaschine und/oder eine Achse vorgeschlagen. Die Antriebsvorrichtung umfasst einen Antrieb, insbesondere eine Antriebswelle oder Eingangswelle, und einen Abtrieb, insbesondere eine Abtriebswelle oder Ausgangswelle, und eine erste und zweite Energiemaschine. Die Antriebsvorrichtung umfasst weiter eine erste Übersetzungseinheit, wobei die erste Übersetzungseinheit einen ersten und zweiten Eingang und einen ersten und zweiten Ausgang aufweist. Der Antrieb ist mit dem Abtrieb über die oder durch die erste Übersetzungseinheit oder die erste und eine zweite Übersetzungseinheit verbindbar oder verbunden. Die erste Energiemaschine ist mit dem ersten Eingang durch ein erstes Schaltelement verbindbar oder verbunden und die zweite Energiemaschine ist mit dem zweiten Eingang verbunden. Die erste Übersetzungseinheit kann insbesondere eines oder mehrere Planetengetriebe umfassen.

Unter verbunden kann bevorzugt mechanisch verbunden und/oder mechanisch wirkverbunden verstanden werden. Im Speziellen kann unter verbunden zusätzlich oder alternativ antreibbar verbunden, also drehmoment- und/oder drehzahlübertragend verbunden, und/oder gekoppelt, also insbesondere mechanisch gekoppelt und/oder starr gekoppelt, und/oder drehfest gekoppelt verstanden werden. Unter verbindbar kann bevorzugt mechanisch verbindbar und/oder mechanisch wirkverbindbar verstanden werden. Im Speziellen kann unter verbindbar zusätzlich oder alternativ antreibbar verbindbar, also drehmoment- und/oder drehzahlübertragend verbindbar, und/oder koppelbar, also mechanisch koppelbar und/oder starr koppelbar, und/oder drehfest verbindbar verstanden werden. Unter verbunden kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Unter einem Schaltelement, insbesondere einem ersten und/oder zweiten und/oder dritten und/oder vierten und/oder fünften und/oder sechsten und/oder siebten Schaltelement und/oder weiteren Schaltelementen, kann ein Verbindungsteil verstanden werden, mittels dem wenigstens ein eine Energie und/oder Kraft und/oder ein Drehmoment und/oder eine Drehzahl übertragendes Teil mit einem weiteren eine Energie und/oder Kraft und/oder ein Drehmoment und/oder eine Drehzahl übertragenden Teil oder mit einem orts- oder gehäusefesten Teil antriebswirksam verbindbar ist. Das jeweilige Schaltelement ist zwischen zumindest einen geöffneten und einen geschlossenen Zustand schaltbar, wobei das Schaltelement im geöffneten Zustand weder eine Energie und/oder Kraft und/oder ein Drehmoment und/oder eine Drehzahl zwischen zwei mit dem Schaltelement zusammenwirkenden Teilen übertragen kann, und wobei das Schaltelement im geschlossenen Zustand eine Energie und/oder Kraft und/oder ein Drehmoment und/oder eine Drehzahl zwischen den zwei mit dem Schaltelement zusammenwirkenden Teilen übertragen kann. Sofern eine Verbindung, insbesondere eine Wirkverbindung, zwischen zwei Elementen oder Komponenten der Antriebsvorrichtung besteht, werden Energie und/oder Kraft und/oder ein Drehmoment und/oder eine Drehzahl von einem Element oder einer Komponente auf das andere Element oder die andere Komponente übertragen. Ein Schaltelement, insbesondere das erste und/oder zweite und/oder dritte und/oder vierte und/oder fünfte und/oder sechste und/oder siebte Schaltelement, können eine Kupplung, insbesondere eine Lamellenkupplung, und/oder eine Bremse und/oder eine Synchronisierung und/oder eine Klauenkupplung sein.

Im Folgenden kann ein Eingang, insbesondere der erste und/oder der zweite und/oder ein dritter und/oder vierter Eingang, eine mechanische Leistungsschnittstelle sein, mit welcher eine Kraft und/oder ein Drehmoment und/oder eine Drehzahl eingeleitet werden kann, bevorzugt in die Übersetzungseinheiten, besonders bevorzugt in die erste Übersetzungseinheit und/oder die zweite Übersetzungseinheit, eingeleitet werden kann. Im Folgenden kann ein Ausgang, insbesondere der erste und/oder zweite und/oder dritte und/oder ein vierter Ausgang, und/oder der Abtrieb und/oder die Vorgelegewelle, eine mechanische Leistungsschnittstelle sein, mit welcher eine Kraft und/oder ein Drehmoment und/oder eine Drehzahl ausgeleitet werden kann, bevorzugt aus den Übersetzungseinheiten, besonders bevorzugt aus der der ersten Übersetzungseinheit und/oder der zweiten Übersetzungseinheit ausgeleitet werden kann.

Der erste Eingang kann ein erstes Antriebselement umfassen oder als ein erstes Antriebselement ausgebildet sein. Der zweite Eingang kann ein zweites Antriebselement umfassen oder als ein zweites Antriebselement ausgebildet sein. Der erste und/oder zweite Eingang, insbesondere das erste und/oder zweite Antriebselement, kann oder können beispielsweise als eine Welle oder ein Zahnrad und/oder ein Schaltelement ausgebildet sein und/oder diese umfassen. Der erste Ausgang kann ein erstes Abtriebselement umfassen oder als ein erstes Abtriebselement ausgebildet sein. Der zweite Ausgang kann ein zweites Abtriebselement umfassen oder als ein zweites Abtriebselement ausgebildet sein. Der erste und/oder zweite Ausgang, insbesondere das erste und/oder zweite Abtriebselement, kann oder können beispielsweise als eine Welle und/oder ein Zahnrad und/oder ein Schaltelement ausgebildet sein und/oder diese umfassen.

Der erste Eingang kann zur eingangsseitigen Anbindung und/oder zur Verbindung der ersten Übersetzungseinheit mit dem ersten Variator oder einer angetriebenen Komponente der Antriebsvorrichtung ausgebildet sein. Der zweite Eingang kann zur eingangsseitigen Anbindung und/oder zur Verbindung der ersten Übersetzungseinheit mit dem ersten Variator oder einer angetriebenen Komponente der Antriebsvorrichtung ausgebildet sein. Über den ersten und/oder zweiten Eingang kann eine Kraft und/oder ein Drehmoment und/oder eine Drehzahl in die erste Übersetzungseinheit einleitbar oder an diese übertragbar sein.

Der erste und/oder zweite Ausgang kann oder können zur ausgangsseitigen Anbindung, insbesondere an den Abtrieb oder die zweite Übersetzungseinheit, ausgebildet sein. Die erste Übersetzungseinheit kann mit dem oder durch den ersten und/oder zweiten Ausgang mit der zweiten Übersetzungseinheit und/oder dem Abtrieb, insbesondere der Ausgangswelle, verbindbar oder verbunden sein. Über den ersten und/oder zweiten Ausgang kann eine Kraft und/oder ein Drehmoment und/oder eine Drehzahl in die zweite Übersetzungseinheit und/oder den Abtrieb, insbesondere die Ausgangswelle, einleitbar oder an diese oder diesen übertragbar sein.

Der Antrieb, insbesondere die Eingangswelle oder Antriebswelle, kann mit dem ersten Schaltelement verbunden sein. Die erste Energiemaschine kann mit dem oder durch den Antrieb mit dem ersten Schaltelement verbunden sein. Die erste Energiemaschine kann direkt oder über eine oder mit einer oder durch eine erste Übersetzungsstufe, insbesondere eine dritte Stirnradstufe oder ein erstes Zahnradpaar oder drei oder mehr Zahnräder oder ein viertes Planetengetriebe oder ein sonstiges Getriebe, mit dem Antrieb verbunden sein. Die erste Energiemaschine kann durch den oder über den oder mit dem Antrieb und über das oder mit dem ersten Schaltelement mit dem ersten Eingang verbindbar oder verbunden sein. Die erste Energiemaschine kann aber auch direkt über das oder mit dem ersten Schaltelement mit dem ersten Eingang verbindbar sein. Die zweite Energiemaschine kann direkt oder über eine oder mit einer oder durch eine zweite Übersetzungsstufe, insbesondere eine vierte Stirnradstufe oder ein zweites Zahnradpaar oder drei oder mehr Zahnräder oder ein fünftes Planetengetriebe oder ein sonstiges Getriebe, mit dem zweiten Eingang verbunden sein. Die erste Energiemaschine kann ein erster Variator sein und/oder die die zweite Energiemaschine kann ein zweiter Variator sein. Die erste Energiemaschine und das erste Schaltelement können mit dem Antrieb verbunden sein.

Der Antrieb, insbesondere die Antriebswelle oder Eingangswelle, und/oder der Abtrieb, insbesondere die Abtriebswelle oder Ausgangswelle kann, eine Vollwelle sein. Der Antrieb und der Abtrieb können koaxial zueinander angeordnet sein. Der Abtrieb kann mit einem Fahrantrieb verbunden sein. Im Speziellen kann der Abtrieb mit einer oder mehreren oder durch eine oder mehrere weitere Übersetzungsstufen mit dem Fahrantrieb verbunden sein. Die eine oder mehrere weitere Übersetzungsstufen können als weitere Stirnradstufen und/oder weitere Zahnradpaare und/oder drei oder mehr Zahnräder und/oder weitere Planetengetriebe oder sonstige Getriebe ausgebildet sein.

Die Antriebsvorrichtung, oder insbesondere die Arbeitsmaschine oder die Achse, kann den Fahrantrieb, insbesondere einen Vorderachsantrieb und/oder einen Hinterachsantrieb umfassen. Der Abtrieb kann mit dem Fahrantrieb, insbesondere dem Vorderachsantrieb und/oder dem Hinterachsantrieb, verbunden sein. Der Fahrantrieb kann eine erste Fahrzeugachse oder Vorderachse und/oder eine zweite Fahrzeugachse oder Hinterachse und/oder ein erstes Differenzialgetriebe oder ein Vorderachsdifferenzial und/oder ein zweites Differenzialgetriebe oder ein Hinterachsdifferenzial und/oder das oder die Bodeneingriffsmittel umfassen. Der Vorderachsantrieb kann die erste Fahrzeugachse oder Vorderachse und/oder das erste Differenzialgetriebe oder das Vorderachsdifferenzial und/oder das oder die Bodeneingriffsmittel umfassen. Der Hinterachsantrieb kann die zweite Fahrzeugachse oder Hinterachse und/oder das zweite Differenzialgetriebe oder das Hinterachsdifferenzial und/oder das oder die Bodeneingriffsmittel umfassen. Das erste Differenzialgetriebe kann antriebsseitig mit dem Abtrieb und/oder der Vorgelegewelle verbindbar oder verbunden sein. Ausserdem kann das erste Differenzialgetriebe abtriebsseitig mit der ersten Fahrzeugachse, insbesondere mit einer linken Welle und einer rechten Welle zum Antrieb von Bodeneingriffsmitteln verbindbar oder verbunden sein. Das zweite Differenzialgetriebe kann antriebsseitig mit dem Abtrieb und/oder der Vorgelegewelle verbindbar oder verbunden sein. Ausserdem kann das zweite Differenzialgetriebe abtriebsseitig mit der zweiten Fahrzeugachse, insbesondere mit einer linken Welle und einer rechten Welle zum Antrieb von Bodeneingriffsmitteln verbindbar oder verbunden sein.

Die Antriebsvorrichtung und/oder die Arbeitsmaschine und/oder die Achse kann eine Steuereinheit umfassen. Die Steuereinheit kann mit der ersten und/oder zweiten Energiemaschine signalverbunden und/oder wirkend gekoppelt und/oder signalübertragend und/oder datenleitend verbunden sein. Die Steuereinheit kann konfiguriert sein, eines oder mehrere Drehzahlsignale und/oder Drehmomentsignale von der Antriebsvorrichtung, insbesondere von einem oder mehreren Drehzahl- und/oder Drehmomentsensoren der Antriebsvorrichtung, und/oder der ersten und/oder zweiten Energiemaschine zu empfangen. Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die Drehzahl und/oder das Drehmoment der Antriebsvorrichtung, insbesondere der ersten und/oder zweiten Energiemaschine, einzustellen und/oder zu verstellen, insbesondere eine vorgebbare Drehzahl und/oder ein vorgebbares Drehmoment einzustellen und/oder zu verstellen. Die Steuereinheit kann konfiguriert sein, die Drehzahl eines ersten und/oder zweiten Leistungsausgangs einzustellen und/oder zu verstellen.

Die Schaltelemente können mit der Steuereinheit signalverbunden und/oder wirkend gekoppelt und/oder signalübertragend und/oder datenleitend verbunden sein. Im Speziellen kann jedes Schaltelement ein Ventil oder eine Ventilanordnung, insbesondere ein Steuerventil, oder ein Aktuator zum Ansteuern und/oder Einstellen und/oder Verstellen des jeweiligen zugeordneten Schaltelements umfassen. Das Ventil oder die Ventilanordnung oder der Aktuator können mit dem jeweiligen zugeordneten Schaltelement verbunden und/oder wirkend gekoppelt sein. Die Steuereinheit kann mit dem Ventil oder der Ventilanordnung oder dem Aktuator des jeweiligen zugeordneten Schaltelements signalverbunden und/oder wirkend gekoppelt und/oder signalübertragend und/oder datenleitend verbunden sein. Die Steuereinheit kann konfiguriert sein, das Schaltelement, insbesondere über das oder mit dem jeweiligen zugeordneten Ventil oder der Ventilanordnung oder dem Aktuator, anzusteuern und/oder einzustellen und/oder zu verstellen. Die Steuereinheit kann konfiguriert sein, das Schaltelement, insbesondere über das oder mit dem jeweiligen zugeordneten Ventil oder die Ventilanordnung oder den Aktuator, in die erste Position, also den geöffneten Zustand, oder die zweite Position, also den geschlossenen Zustand, einzustellen und/oder zu verstellen, insbesondere auch von der ersten in die zweite Position zu bewegen und umgekehrt.

Im Speziellen kann die Antriebsvorrichtung für die Achse geeignet sein, insbesondere eine elektrisch und/oder hydraulisch angetriebene Achse sein. Ausserdem kann die Antriebsvorrichtung an und/oder in der Achse angeordnet sein. Im Speziellen kann die Antriebsvorrichtung für die Arbeitsmaschine geeignet sein, insbesondere eine elektrisch und/oder hydraulisch angetriebene Arbeitsmaschine sein. Ausserdem kann die Antriebsvorrichtung an und/oder in der Arbeitsmaschine angeordnet sein.

Wesentlich für die Erfindung ist, dass die erste Energiemaschine über das oder mit dem ersten Schaltelement mit dem ersten Eingang der ersten Übersetzungseinheit verbindbar, insbesondere lösbar verbindbar ist. Ein wesentlicher Vorteil dieser Erfindung ist, dass bei geöffnetem ersten Schaltelement die erste Energiemaschine unabhängig von der zweiten Energiemaschine den ersten Leistungsausgang antreiben kann und gleichzeitig die zweite Energiemaschine unabhängig von der ersten Energiemaschine den Abtrieb und/oder die Vorgelegewelle und/oder den Fahrantrieb antreiben kann. Vorteilhafterweise können bei geschlossenem erstem Schaltelement die erste und die zweite Energiemaschine gleichzeitig den Abtrieb und/oder die Vorgelegewelle und/oder den Fahrantrieb antreiben, insbesondere ausschließlich den Abtrieb und/oder die Vorgelegewelle und/oder den Fahrantrieb antreiben können.

Zudem kann bei geschlossenem ersten Schaltelement bei konstanter Drehzahl der ersten Energiemaschine Leistung an den ersten Leistungsausgang übertragen werden und gleichzeitig durch Drehzahlveränderung an der zweiten Energiemaschine eine von null ausgehend stufenlose Drehzahl der Antriebsvorrichtung, insbesondere der ersten und/oder zweiten Übersetzungseinheit, und/oder des Abtriebs und/oder der Vorgelegewelle und/oder des Fahrantriebs eingestellt und/oder verstellt werden. Darüber hinaus kann von Vorteil Dabei kann gleichzeitig ein Leistungsübertragung an die Antriebsvorrichtung, insbesondere die erste und/oder zweite Übersetzungseinheit, und/oder den Abtrieb und/oder die Vorgelegewelle und/oder den Fahrantrieb erfolgen. Vorteilhafterweise wird hierdurch ein effizienterer und kompakterer Antriebsstrang ermöglicht. Ausserdem kann vorteilhafterweise eine konstruktiv einfache Antriebsvorrichtung realisiert werden.

In Ausgestaltung der Erfindung umfasst die erste Übersetzungseinheit ein Planetenkoppelgetriebe. Im Speziellen kann die erste Übersetzungseinheit genau ein Planetenkoppelgetriebe umfassen. Das Planetenkoppelgetriebe kann insbesondere zwei verschiedenen Standübersetzungen umfassen oder aufweisen. Die erste Übersetzungseinheit kann alternativ oder zusätzlich mindestens oder genau ein erstes und/oder zweites Planetengetriebe umfassen, wobei die Planetengetriebe miteinander gekoppelt sein können. Im Speziellen kann die erste Übersetzungseinheit, insbesondere das Planetenkoppelgetriebe, alternativ oder zusätzlich das erste und das zweite Planetengetriebe umfassen, wobei das erste und zweite Planetengetriebe miteinander gekoppelt sein können. Das erste und zweite Planetengetriebe können also derart miteinander gekoppelt sein, dass die erste Übersetzungseinheit den ersten und zweiten Eingang und den ersten und zweiten Ausgang aufweist. Im Speziellen kann ein erster Planetenträger des ersten Planetengetriebes mit einem zweiten Hohlrad des zweiten Planetengetriebes verbunden ist und ein erstes Hohlrad des ersten Planetengetriebes mit einem zweiten Planetenträger des zweiten Planetengetriebes verbunden sein. Alternativ kann der erste Planetenträger des ersten Planetengetriebes mit dem zweiten Planetenträger des zweiten Planetengetriebes und ein erstes Hohlrad des ersten Planetengetriebes mit einem zweiten Hohlrad des zweiten Planetengetriebes verbunden sein. Die erste Energiemaschine kann über den oder durch den Antrieb und der Antrieb über das oder durch das erste Schaltelement mit dem ersten Eingang der ersten Übersetzungseinheit, bevorzugt dem ersten Eingang des Planetenkoppelgetriebes, besonders bevorzugt dem ersten Hohlrad des ersten Planetengetriebes und dem zweiten Planetenträger des zweiten Planetengetriebes verbindbar oder verbunden sein. Alternativ oder zusätzlich kann die zweite Energiemaschine mit dem zweiten Eingang der ersten Übersetzungseinheit, bevorzugt dem zweiten Eingang des Planetenkoppelgetriebes, besonders bevorzugt dem ersten Sonnenrad des ersten Planetengetriebes, verbunden sein. Die erste Übersetzungseinheit kann aber auch als Ravigneaux-Satz und/oder als Lepelletier-Getriebe und/oder als sonstiges Planetenkoppelgetriebe ausgebildet sein. Mit anderen Worten, vorteilhafterweise können also das erste und zweite Planetengetriebe zu einem Planetenkoppelgetriebe mit vier Freiheitsgraden kombiniert werden. Die vier Freiheitsgrad können dem ersten und zweiten Eingang und dem ersten und zweite Ausgang entsprechen. Die beschriebene Ausbildung mit verschiedenen Standübersetzungen und/oder der Kopplung ermöglichen vorteilhafterweise unterschiedliche Übersetzungen und/oder Modi der Antriebsvorrichtung, insbesondere gleichzeitig einen kompakten Aufbau. Im Weiteren können die oben genannten Vorteile der Antriebsvorrichtung realisiert werden.

In Ausgestaltung der Erfindung ist der erste Eingang mit einem ersten Hohlrad des ersten Planetengetriebes und/oder einem zweiten Planetenträger des zweiten Planetengetriebes verbindbar oder verbunden. Der erste Eingang kann das erste Schaltelement und/oder das erste Antriebselement sein. Mit anderen Worten, das erste Schaltelement kann als der erste Eingang ausgebildet sein oder kann der erste Eingang sein und/oder mit dem ersten Eingang, insbesondere dem ersten Antriebselement, verbunden sein. Das erste Schaltelement und/oder das erste Antriebselement können mit dem ersten Hohlrad und dem zweiten Planetenträger verbunden sein. Der zweite Eingang kann mit einem ersten Sonnenrad des ersten Planetengetriebes verbunden sein. Der zweite Eingang kann das erste Sonnenrad des ersten Planetengetriebes und/oder das zweite Antriebselement sein. Mit anderen Worten, das erste Sonnenrad des ersten Planetengetriebes kann als der zweite Eingang ausgebildet sein oder kann der zweite Eingang sein und/oder mit dem zweiten Eingang, insbesondere dem zweiten Antriebselement, verbunden sein. Die zweite Energiemaschine kann mit dem ersten Sonnenrad verbunden sein. Der erste Ausgang kann mit einem ersten Planetenträger des ersten Planetengetriebes und/oder einem zweiten Hohlrad des zweiten Planetengetriebes verbindbar oder verbunden sein. Mit anderen Worten, der erste Planetenträger des ersten Planetengetriebes und/oder das zweite Hohlrad des zweiten Planetengetriebes können als der erste Ausgang ausgebildet sein oder können der erste Ausgang sein oder können mit dem ersten Ausgang, insbesondere dem ersten Abtriebselement, verbunden sein. Der zweite Ausgang kann mit einem zweiten Sonnenrad des zweiten Planetengetriebes verbunden sein. Mit anderen Worten, das zweite Sonnenrad des zweiten Planetengetriebes kann als der zweite Ausgang ausgebildet sein oder kann der zweite Ausgang sein oder kann mit dem zweiten Ausgang, insbesondere dem zweiten Abtriebselement, verbunden sein. Alternativ kann der erste Eingang mit dem zweiten Hohlrad des zweiten Planetengetriebes und dem ersten Planetenträger des ersten Planetengetriebes verbindbar oder verbunden sein oder der erste Eingang, insbesondere das erste Antriebselement, mit diesen verbindbar oder verbunden sein. Das erste Schaltelement kann mit dem zweiten Hohlrad und dem ersten Planetenträger verbunden sein. Alternativ kann der erste Eingang mit dem zweiten Planetenträger des zweiten Planetengetriebes und der erste Planetenträger des ersten Planetengetriebes verbindbar oder verbunden sein oder der erste Eingang, insbesondere das erste Antriebselement, mit diesen verbindbar oder verbunden sein.

Das erste Schaltelement kann mit dem ersten Planetenträger und dem zweiten Planetenträger verbunden sein. Alternativ kann der erste Eingang mit dem zweiten Hohlrad des zweiten Planetengetriebes und das erste Hohlrad des ersten Planetengetriebes verbindbar oder verbunden sein oder der erste Eingang, insbesondere das erste Antriebselement, mit diesen verbindbar oder verbunden sein. Das erste Schaltelement kann mit dem zweiten Hohlrad und dem ersten Hohlrad verbunden sein. Alternativ oder zusätzlich kann der erste Ausgang mit dem ersten Planetenträger des ersten Planetengetriebes und dem zweiten Planetenträger des zweiten Planetengetriebes verbindbar oder verbunden sein oder der erste Ausgang, insbesondere das erste Abtriebselement, mit diesen verbindbar oder verbunden sein. Alternativ oder zusätzlich kann der erste Ausgang mit dem ersten Hohlrad des ersten Planetengetriebes und dem zweiten Hohlrad des zweiten Planetengetriebes verbindbar oder verbunden sein oder der erste Ausgang, insbesondere das erste Abtriebselement, mit diesen verbunden sein. Dadurch können die oben genannten Vorteile der Antriebsvorrichtung realisiert werden.

In Ausgestaltung der Erfindung sind die erste Energiemaschine als erster Elektromotor und die zweite Energiemaschine als zweiter Elektromotor ausgebildet. Alternativ oder zusätzlich können die erste und/oder zweite Energiemaschine als Brennstoffzelle ausgebildet sein. Die erste und/oder zweite Energiemaschine können mit Gleichstrom und/oder Drehstrom betriebene Synchron- und/oder Asynchronmaschinen mit permanenter und/oder elektrischer Erregung, besonders bevorzugt eine permanenterregte Drehstrom-Synchronmaschinen sein. Die erste und/oder zweite Energiemaschine können motorisch und/oder generatorisch betreibbar sein. Die erste und/oder zweite Energiemaschine können die Antriebsvorrichtung mit einer Kraft und/oder einer Drehzahl und/oder einem Drehmoment antreiben. Die erste und/oder zweite Energiemaschine können jeweils eine Abtriebswelle, insbesondere eine erste und zweite Abtriebswelle umfassen.

Die erste Energiemaschine kann abtriebsseitig, also insbesondere mit der ersten Abtriebswelle, mit dem ersten Eingang, insbesondere dem ersten Antriebselement und/oder dem ersten Schaltelement, verbindbar oder verbunden sein. Die zweite Energiemaschine kann abtriebsseitig, also insbesondere mit der zweiten Abtriebswelle, mit dem zweiten Eingang, insbesondere dem zweiten Antriebselement und/oder dem ersten Sonnenrad des ersten Planetengetriebes, verbunden sein. Dazu kann beispielsweise ein erster Rotor der ersten Energiemaschine und/oder ein zweiter Rotor der zweiten Energiemaschine mit der jeweiligen Abtriebswelle verbunden sein. Der erste und/oder zweite Rotor können jeweils insbesondere innenliegende Rotoren sein. Die erste und/oder zweite Energiemaschine kann als Drehmoment- oder Torquemotor ausgeführt sein. Die erste und/oder zweite Energiemaschine können als Generator ausgebildet sein.

Dadurch kann vorteilhafterweise eine elektrische und/oder hydraulische Antriebsvorrichtung, insbesondere eine rein elektrische oder rein hydraulische Antriebsvorrichtung realisiert werden. Alternativ oder zusätzlich können die erste und/oder zweite Energiemaschine als hydrostatischer Variator oder als Hydrostat ausgebildet sein. Vorteilhafterweise kann die Antriebsvorrichtung, insbesondere auch die Achse und/oder die Arbeitsmaschine, dadurch elektrisch und/oder hydraulisch, insbesondere nur elektrisch und/oder nur hydraulisch antreibbar sein.

In Ausgestaltung der Erfindung umfasst die Antriebsvorrichtung eine zweite Übersetzungseinheit, und die zweite Übersetzungseinheit umfasst eine erste Stirnradstufe und/oder eine zweite Stirnradstufe und/oder ein Planetengetriebe, insbesondere ein drittes Planetengetriebe, und mindestens ein zweites und drittes Schaltelement. Alternativ oder zusätzlich kann die zweite Übersetzungseinheit zwei Eingänge, insbesondere einen dritten und vierten Eingang, und mindestens einen Ausgang, insbesondere einen dritten oder einen dritten und vierten Ausgang aufweisen.

Der dritte und/oder vierte Eingang können zur eingangsseitigen Anbindung und/oder zur Verbindung der zweiten mit der ersten Übersetzungseinheit und/oder einer angetriebenen Komponente der Antriebsvorrichtung ausgebildet sein. Über den dritten und/oder vierten Eingang kann ein Drehmoment und/oder eine Drehzahl in die zweite Übersetzungseinheit einleitbar oder an diese übertragbar sein. Der dritte und/oder vierte Ausgang kann oder können zur ausgangsseitigen Anbindung der zweiten Übersetzungseinheit ausgebildet sein. Der dritte und/oder vierte Ausgang kann oder können die zweite Übersetzungseinheit mit einer weiteren Übersetzungseinheit und/oder dem Abtrieb, insbesondere der Ausgangswelle, verbinden oder mit diesen verbunden sein. Über den dritten und/oder vierten Ausgang kann ein Drehmoment und/oder eine Drehzahl in eine weitere Übersetzungseinheit und/oder den Abtrieb, insbesondere die Ausgangswelle, einleitbar oder an diese oder diesen übertragbar sein. Der dritte Eingang kann ein drittes Antriebselement umfassen oder als ein drittes Antriebselement ausgebildet sein. Alternativ kann das erste Abtriebselement der dritte Eingang sein und/oder als der dritte Eingang ausgebildet sein. Ebenso kann das erste Abtriebselement gleichzeitig als drittes Antriebselement ausgebildet sein oder das dritte Antriebselement sein. Der vierte Eingang kann ein viertes Antriebselement umfassen oder als ein viertes Antriebselement ausgebildet sein. Alternativ kann das zweite Abtriebselement der vierte Eingang sein und/oder als der vierte Eingang ausgebildet sein. Ebenso kann das zweite Abtriebselement gleichzeitig als viertes Antriebselement ausgebildet sein oder das vierte Antriebselement sein.

Der dritte und/oder vierte Eingang, insbesondere das dritte und/oder vierte Antriebselement, kann oder können beispielsweise als eine Welle oder ein Zahnrad und/oder ein Schaltelement ausgebildet sein und/oder diese umfassen. Der dritte Ausgang kann ein drittes Abtriebselement umfassen oder als ein drittes Abtriebselement ausgebildet sein. Der vierte Ausgang kann ein viertes Abtriebselement umfassen oder als ein viertes Abtriebselement ausgebildet sein. Der dritte und/oder vierte Ausgang, insbesondere das dritte und/oder vierte Abtriebselement, kann oder können beispielsweise als eine Welle und/oder ein Zahnrad und/oder ein Schaltelement ausgebildet sein und/oder diese umfassen. Der dritte Eingang kann mit dem zweiten Schaltelement verbindbar oder verbunden sein. Der dritte Eingang kann das zweite Schaltelement sein. Alternativ oder zusätzlich kann das erste Abtriebselement oder das dritte Antriebselement als dritter Eingang ausgebildet sein. Mit anderen Worten, das zweite Schaltelement kann als der dritte Eingang ausgebildet sein oder kann der dritte Eingang sein und/oder mit dem dritten Eingang und/oder dem ersten Abtriebselement und/oder dem dritten Antriebselement verbunden sein. Der erste Ausgang kann mit dem dritten Eingang verbunden sein. Der vierte Eingang kann mit dem dritten Schaltelement verbindbar oder verbunden. Der vierte Eingang kann das dritte Schaltelement. Alternativ oder zusätzlich kann das zweite Abtriebselement oder das vierte Antriebselement als vierter Eingang ausgebildet sein. Mit anderen Worten, das dritte Schaltelement kann als der vierte Eingang ausgebildet sein oder kann der vierte Eingang sein und/oder mit dem vierten Eingang und/oder dem zweiten Abtriebselement und/oder dem vierten Antriebselement verbunden sein. Der zweite Ausgang kann mit dem vierten Eingang verbunden sein.

Im Speziellen kann die zweite Übersetzungseinheit beispielsweise die folgenden Komponenten umfassen:
- die erste Stirnradstufe und das zweite und dritte Schaltelement, und insbesondere den dritten und vierten Eingang und den dritten Ausgang (erste Ausführungsform), oder
- die erste und zweite Stirnradstufe und das zweite und dritte Schaltelement, und insbesondere den dritten und vierten Eingang und den dritten und vierten Ausgang (zweite Ausführungsform), oder
- die erste Stirnradstufe und das Planetengetriebe, insbesondere das dritte Planetengetriebe, und das zweite und dritte und ein viertes Schaltelement, und insbesondere den dritten und vierten Eingang und den dritten Ausgang (dritte Ausführungsform).

In der ersten Ausführungsform kann die zweite Übersetzungseinheit die erste Stirnradstufe und das zweite und dritte Schaltelement umfassen, und:
- der dritte Eingang, insbesondere das zweite Schaltelement, kann mit dem ersten Ausgang der ersten Übersetzungseinheit verbunden sein, und/oder
- der vierte Eingang, insbesondere das dritte Schaltelement, kann mit dem zweiten Ausgang der ersten Übersetzungseinheit verbunden sein, und/oder
- der erste Ausgang kann durch das zweite Schaltelement mit der ersten Stirnradstufe verbindbar oder verbunden sein und/oder der zweite Ausgang kann durch das dritte Schaltelement mit der ersten Stirnradstufe verbindbar oder verbunden sein, und/oder
- das zweite und/oder dritte Schaltelement kann über die oder mit der ersten Stirnradstufe mit dem Abtrieb, insbesondere der Ausgangswelle verbindbar oder verbunden sein.

Der dritte Ausgang kann mit der ersten Stirnradstufe verbindbar oder verbunden sein. Mit anderen Worten, die erste Stirnradstufe kann als der dritte Ausgang ausgebildet sein oder kann der dritte Ausgang sein und/oder kann mit dem dritten Ausgang, insbesondere dem dritten Abtriebselement, verbunden sein. Die erste Stirnradstufe und/oder der dritte Ausgang, insbesondere das dritte Abtriebselement, kann mit dem Abtrieb verbindbar oder verbunden sein.

In der ersten Ausführungsform können mit der ersten Übersetzungseinheit 58 und mit der zweiten Übersetzungseinheit 212, umfassend die erste Stirnradstufe 320 und das zweite und dritte Schaltelement 324, 326, und optional einem fünften Schaltelement 220 (Details siehe unten) jeweils sechs Modi pro Drehrichtung des Abtriebs 54 der Antriebsvorrichtung 20, oder mit anderen Worten, in Vorwärts- und Rückwärtsrichtung der Antriebsvorrichtung 20 oder Arbeitsmaschine 10 realisiert werden (siehe Tabelle 1). Im Speziellen können sechs Vorwärts- und sechs Rückwärtsgänge der Antriebsvorrichtung 20 oder Arbeitsmaschine 10 realisiert werden.

**Tabelle 1 - Modi der ersten Ausführungsform mit dem fünften Schaltelement.**

| **Vorwärts** | **Rückwärts** | **210** | **324** | **326** | **220** | **50 (im Folgenden MG1)** | **56 (im Folgenden MG2)** |
|---|---|---|---|---|---|---|---|
| Mode 1 | | | X | X | | - | MG2 treibt Abtrieb an; Drehzahl MG2 variabel |
| Mode 2 | | | X | X | X | MG1 treib ersten Leistungsausgang an; Drehzahl MG1 fest | MG2 treibt Abtrieb an; Drehzahl MG2 variabel |
| Mode 3 | | X | X | | | MG1 treibt Abtrieb an; Drehzahl MG2 variabel | MG2 treibt Abtrieb an; Drehzahl MG2 variabel |
| Mode 4 | | X | | X | | MG1 treibt Abtrieb an; Drehzahl MG2 variabel | MG2 treibt Abtrieb an; Drehzahl MG2 variabel |
| Mode 5 | | X | X | | X | MG1 treibt Abtrieb und/oder ersten Leistungsausgang an; Drehzahl MG1 fest | MG2 treibt Abtrieb und/oder ersten Leistungsausgang an; Drehzahl MG2 variabel |
| Mode 6 | | X | | X | X | MG1 treibt Abtrieb und/oder ersten | MG2 treibt Abtrieb und/oder ersten |
| | | | | | | Leistungsausgang an; Drehzahl MG1 fest | Leistungsausgang an; Drehzahl MG2 variabel |
| | Mode 1 | | X | X | | - | MG2 treibt Abtrieb an; Drehzahl MG2 variabel |
| | Mode 2 | | X | X | X | MG1 treib ersten Leistungsausgang an; Drehzahl MG1 fest | MG2 treibt Abtrieb an; Drehzahl MG2 variabel |
| | Mode 3 | X | X | | | MG1 treibt Abtrieb an; Drehzahl MG2 variabel | MG2 treibt Abtrieb an; Drehzahl MG2 variabel |
| | Mode 4 | X | | X | | MG1 treibt Abtrieb an; Drehzahl MG2 variabel | MG2 treibt Abtrieb an; Drehzahl MG2 variabel |
| | Mode 5 | X | X | | X | MG1 treibt Abtrieb und/oder ersten Leistungsausgang an; Drehzahl MG1 fest | MG2 treibt Abtrieb und/oder ersten Leistungsausgang an; Drehzahl MG2 variabel |
| | Mode 6 | X | | X | X | MG1 treibt Abtrieb und/oder ersten Leistungsausgang an; Drehzahl MG1 fest | MG2 treibt Abtrieb und/oder ersten Leistungsausgang an; Drehzahl MG2 variabel |

Die Modi können durch Öffnen und Schliessen der zu den genannten Bezugszeichen zugehörigen Schaltelemente oder Koppelelemente und den Betrieb der Energiemaschinen wie in Tabelle 1 dargestellt realisiert werden. Die Modi können durch Öffnen und Schliessen des ersten Schaltelements (Bezugszeichen 210) und/oder des zweiten Schaltelements (Bezugszeichen 324) und/oder dritten Schaltelements (Bezugszeichen 326) und/oder fünften Schaltelements (Bezugszeichen 220) und das Betreiben der ersten und zweiten Energiemaschine (Bezugszeichen 50, 56 bzw. MG1 und MG2) wie in Tabelle 1 dargestellt realisiert werden.

In der zweiten Ausführungsform umfasst die zweite Übersetzungseinheit die erste und zweite Stirnradstufe und das zweite und dritte Schaltelement, und zusätzlich oder alternativ zur ersten Ausführungsform:
- kann der dritte Eingang, insbesondere das zweite Schaltelement, mit dem ersten Ausgang der ersten Übersetzungseinheit verbunden sein, und/oder
- kann der vierte Eingang, insbesondere das dritte Schaltelement, mit dem zweiten Ausgang der ersten Übersetzungseinheit verbunden sein, und/oder
- kann der erste Ausgang durch das zweite Schaltelement mit der ersten Stirnradstufe verbindbar sein und der zweite Ausgang durch das dritte Schaltelement mit der zweiten Stirnradstufe verbindbar sein, und/oder
- kann das zweite Schaltelement über die oder mit der ersten Stirnradstufe mit dem Abtrieb, insbesondere der Ausgangswelle verbindbar oder verbunden sein,
   und/oder
- kann das dritte Schaltelement über die oder mit der zweiten Stirnradstufe mit dem Abtrieb, insbesondere der Ausgangswelle verbindbar oder verbunden sein.

Der dritte Ausgang kann mit der ersten Stirnradstufe verbindbar oder verbunden sein. Mit anderen Worten, die erste Stirnradstufe kann als der dritte Ausgang ausgebildet sein oder kann der dritte Ausgang sein und/oder kann mit dem dritten Ausgang, insbesondere dem dritten Abtriebselement, verbunden sein. Die erste Stirnradstufe und/oder der dritte Ausgang, insbesondere das dritte Abtriebselement, kann mit dem Abtrieb verbindbar oder verbunden sein.

Der vierte Ausgang kann mit der zweiten Stirnradstufe verbindbar oder verbunden sein. Mit anderen Worten, die zweite Stirnradstufe kann als der vierte Ausgang ausgebildet sein oder kann der vierte Ausgang sein und/oder kann mit dem vierten Ausgang, insbesondere dem vierten Abtriebselement, verbunden sein. Die zweite Stirnradstufe und/oder der vierte Ausgang, insbesondere das vierte Abtriebselement, kann mit dem Abtrieb verbindbar oder verbunden sein.

In der dritten Ausführungsform umfasst die zweite Übersetzungseinheit die erste Stirnradstufe und das Planetengetriebe, insbesondere das dritte Planetengetriebe, und das zweite und das dritte und das vierte Schaltelement, und zusätzlich oder alternativ zur ersten und/oder zweiten Ausführungsform:
- kann der dritte Eingang, insbesondere das zweite Schaltelement, mit dem ersten Ausgang der ersten Übersetzungseinheit verbunden sein, und/oder
- kann der vierte Eingang, insbesondere das dritte Schaltelement, mit dem zweiten Ausgang der ersten Übersetzungseinheit verbunden sein, und/oder
- kann der erste Ausgang durch das zweite Schaltelement und/oder der zweite Ausgang durch das dritte Schaltelement mit dem Planetengetriebe oder dem dritten Planetengetriebe, bevorzugt einer Komponente und/oder der gleichen Komponente des Planetengetriebes oder des dritten Planetengetriebes, besonders bevorzugt dem Planetenträger des Planetengetriebes oder dem dritten Planetenträger des dritten Planetengetriebes verbindbar sein, und/oder
- kann das Planetengetriebe oder das dritte Planetengetriebe, bevorzugt eine Komponente des Planetengetriebes oder des dritten Planetengetriebes, besonders bevorzugt der Planetenträger des Planetengetriebes oder der dritte Planetenträger des dritten Planetengetriebes, mit der ersten Stirnradstufe verbunden sein, und/oder
- kann der zweite Ausgang der ersten Übersetzungseinheit mit dem Planetengetriebe oder dem dritten Planetengetriebe, bevorzugt einer Komponente des Planetengetriebes oder des dritten Planetengetriebes, besonders bevorzugt der Sonne des Planetengetriebes oder der dritten Sonne des dritten Planetengetriebes verbunden sein, und/oder
- kann das vierte Schaltelement, das insbesondere als Bremse ausgebildet sein kann, mit dem Planetengetriebe oder dem dritten Planetengetriebe, bevorzugt einer Komponente des Planetengetriebes oder des dritten Planetengetriebes, besonders bevorzugt dem Hohlrad des Planetengetriebes oder dem dritten Hohlrad des dritten Planetengetriebes verbunden sein, und/oder
- kann das zweite und/oder dritte Schaltelement über die oder mit der ersten Stirnradstufe mit dem Abtrieb, insbesondere der Ausgangswelle verbindbar oder verbunden sein, und/oder
- kann das Planetengetriebe oder das dritte Planetengetriebe, insbesondere der dritte Planetenträger, über die oder mit der ersten Stirnradstufe mit dem Abtrieb, insbesondere der Ausgangswelle verbindbar oder verbunden sein.

Der dritte Ausgang kann mit der ersten Stirnradstufe verbindbar oder verbunden sein. Mit anderen Worten, die erste Stirnradstufe kann als der dritte Ausgang ausgebildet sein oder kann der dritte Ausgang sein und/oder kann mit dem dritten Ausgang, insbesondere dem dritten Abtriebselement, verbunden sein. Die erste Stirnradstufe und/oder der dritte Ausgang, insbesondere das dritte Abtriebselement, kann mit dem Abtrieb verbindbar oder verbunden sein.

In der dritten Ausführungsform können mit der ersten Übersetzungseinheit und mit der zweiten Übersetzungseinheit, umfassend das dritte Planetengetriebe und die erste Stirnradstufe und das zweite und dritte und vierte Schaltelement, und optional dem fünften Schaltelement (Details siehe unten) jeweils acht Modi pro Drehrichtung des Abtriebs der Antriebsvorrichtung, oder mit anderen Worten, in Vorwärts- und Rückwärtsrichtung der Antriebsvorrichtung 20 oder Arbeitsmaschine 10 realisiert werden (siehe Tabelle 2). Im Speziellen können acht Vorwärts- und acht Rückwärtsgänge der Antriebsvorrichtung 20 oder Arbeitsmaschine 10 realisiert werden.

**Tabelle 2 - Modi der dritten Ausführungsform mit dem fünften Schaltelement.**

| **Vorwärts** | **Rückwärts** | **210** | **324** | **326** | **602** | **220** | **50 (im Folgenden MG1)** | **56 (im Folgenden MG2)** |
|---|---|---|---|---|---|---|---|---|
| Mode 1 | | | X | X | | | - | MG2 treibt Abtrieb an; Drehzahl MG2 variabel |
| Mode 2 | | | X | X | | X | MG1 treibt ersten Leistungsausgang an; Drehzahl MG1 fest | MG2 treibt Abtrieb an; Drehzahl MG2 variabel |
| Mode 3 | | X | | X | X | | MG1 treibt Abtrieb an; Drehzahl MG2 variabel | MG2 treibt Abtrieb an; Drehzahl MG2 variabel |
| Mode 4 | | X | X | | | | MG1 treibt Abtrieb an; Drehzahl MG2 variabel | MG2 treibt Abtrieb an; Drehzahl MG2 variabel |
| Mode 5 | | X | | X | | | MG1 treibt Abtrieb an; Drehzahl MG1 variabel | MG2 treibt Abtrieb an; Drehzahl MG2 variabel |
| Mode 6 | | X | | X | X | X | MG1 treibt Abtrieb und/oder ersten Leistungsausgang an; Drehzahl MG1 fest | MG2 treibt Abtrieb und/oder ersten Leistungsausgang an; Drehzahl MG2 variabel |
| Mode 7 | | X | X | | | X | MG1 treibt Abtrieb und/oder ersten Leistungsausgang an; Drehzahl MG1 fest | MG2 treibt Abtrieb und/oder ersten Leistungsausgang an; Drehzahl MG2 variabel |
| Mode 8 | | X | | X | | X | MG1 treibt Abtrieb und/oder ersten Leistungsausgang an; Drehzahl MG1 fest | MG2 treibt Abtrieb und/oder ersten Leistungsausgang an; Drehzahl MG2 variabel |
| | Mode 1 | | X | X | | | - | MG2 treibt Abtrieb an; Drehzahl MG2 variabel |
| | Mode 2 | | X | X | | X | MG1 treibt ersten Leistungsausgang an; Drehzahl MG1 fest | MG2 treibt Abtrieb an; Drehzahl MG2 variabel |
| | Mode 3 | X | | X | X | | MG1 treibt Abtrieb an; Drehzahl MG2 variabel | MG2 treibt Abtrieb an; Drehzahl MG2 variabel |
| | Mode 4 | X | X | | | | MG1 treibt Abtrieb an; Drehzahl MG2 variabel | MG2 treibt Abtrieb an; Drehzahl MG2 variabel |
| | Mode 5 | X | | X | | | MG1 treibt Abtrieb an; Drehzahl MG1 variabel | MG2 treibt Abtrieb an; Drehzahl MG2 variabel |
| | Mode 6 | X | | X | X | X | MG1 treibt Abtrieb und/oder ersten | MG2 treibt Abtrieb und/oder ersten |
| | | | | | | | Leistungsausgang an; Drehzahl MG1 fest | Leistungsausgang an; Drehzahl MG2 variabel |
| | Mode 7 | X | X | | | X | MG1 treibtAbtrieb und/oder ersten Leistungsausgang an; Drehzahl MG1 fest | MG2 treibt Abtrieb und/oder ersten Leistungsausgang an; Drehzahl MG2 variabel |
| | Mode 8 | X | | X | | X | MG1 treibt Abtrieb und/oder ersten Leistungsausgang an; Drehzahl MG1 fest | MG2 treibt Abtrieb und/oder ersten Leistungsausgang an; Drehzahl MG2 variabel |

Die Modi können durch Öffnen und Schliessen der zu den genannten Bezugszeichen zugehörigen Schaltelemente oder Koppelelemente und den Betrieb der Energiemaschinen wie in Tabelle 2 dargestellt realisiert werden. Die Modi können durch Öffnen und Schliessen des ersten Schaltelements (Bezugszeichen 210) und/oder des zweiten Schaltelements (Bezugszeichen 324) und/oder dritten Schaltelements (Bezugszeichen 326) und/oder des vierten Schaltelements (Bezugszeichen 602) und/oder fünften Schaltelements (Bezugszeichen 220) und das Betreiben der ersten und zweiten Energiemaschine (Bezugszeichen 50, 56 bzw. MG1 und MG2) wie in Tabelle 2 dargestellt realisiert werden.

In der dritten Ausführungsform können mit der ersten Übersetzungseinheit und mit der zweiten Übersetzungseinheit, umfassend das dritte Planetengetriebe und die erste Stirnradstufe und das zweite und dritte und vierte Schaltelement, und optional dem fünften und/oder einem sechsten Schaltelement (Details siehe unten) jeweils 10 Modi pro Drehrichtung des Abtriebs der Antriebsvorrichtung, oder mit anderen Worten, in Vorwärts- und Rückwärtsrichtung der Antriebsvorrichtung oder Arbeitsmaschine realisiert werden (siehe Tabelle 3). Im Speziellen können 10 Vorwärts- und 10 Rückwärtsgänge der Antriebsvorrichtung 20 oder Arbeitsmaschine 10 realisiert werden.

**Tabelle 3 - Modi der dritten Ausführungsform mit dem fünften und sechsten Schaltelement.**

| **Vorwärts** | **Rückwärts** | **210** | **324** | **326** | **234** | **602** | **220** | **50 (im Folgenden MG1)** | **56 (im Folgenden MG2)** |
|---|---|---|---|---|---|---|---|---|---|
| Mode 1 | | | | | X | | | - | MG2 treibt Vorgelegewelle und/oder Abtrieb an; Drehzahl MG2 variabel |
| Mode 2 | | | X | X | | | | - | MG2 treibt Vorgelegewelle und/oder Abtrieb an; Drehzahl MG2 variabel |
| Mode 3 | | | | | X | | X | MG1 treibt ersten Leistungsausgang an; Drehzahl MG1 fest | MG2 treibt Vorgelegewelle und/oder Abtrieb an; Drehzahl MG2 variabel |
| Mode 4 | | | X | X | | | X | MG1 treibt ersten Leistungsausgang an; Drehzahl MG1 fest | MG2 treibt Vorgelegewelle und/oder Abtrieb an; Drehzahl MG2 variabel |
| Mode 5 | | X | | X | | X | | MG1 treibt Vorgelegewelle und/oder Abtrieb an; Drehzahl MG2 variabel | MG2 treibt Vorgelegewelle und/oder Abtrieb an; Drehzahl MG2 variabel |
| Mode 6 | | X | X | | | | | MG1 treibt Vorgelegewelle und/oder Abtrieb an; Drehzahl MG2 variabel | MG2 treibt Vorgelegewelle und/oder Abtrieb an; Drehzahl MG2 variabel |
| Mode 7 | | X | | X | | | | MG1 treibt Vorgelegewelle und/oder Abtrieb an; Drehzahl MG2 variabel | MG2 treibt Vorgelegewelle und/oder Abtrieb an; Drehzahl MG2 variabel |
| Mode 8 | | X | | X | | X | X | MG1 treibt Abtrieb und/oder Vorgelegewelle und/oder ersten Leistungsausgang an; Drehzahl MG1 fest | MG2 treibt Abtrieb und/oder Vorgelegewelle und/oder ersten Leistungsausgang an; Drehzahl MG2 variabel |
| Mode 9 | | X | X | | | | X | MG1 treibt Abtrieb und/oder Vorgelegewelle und/oder ersten Leistungsausgang an; Drehzahl MG1 fest | MG2 treibt Abtrieb und/oder Vorgelegewelle und/oder ersten Leistungsausgang an; Drehzahl MG2 variabel |
| Mode 10 | | X | | X | | | X | MG1 treibt Abtrieb und/oder Vorgelegewelle und/oder ersten Leistungsausgang an; Drehzahl MG1 fest | MG2 treibt Abtrieb und/oder Vorgelegewelle und/oder ersten Leistungsausgang an; Drehzahl MG2 variabel |
| | Mode 1 | | | | X | | | - | MG2 treibt Vorgelegewelle und/oder Abtrieb an; Drehzahl MG2 variabel |
| | Mode 2 | | X | X | | | | - | MG2 treibt Vorgelegewelle und/oder Abtrieb |
| | | | | | | | | | an; Drehzahl MG2 variabel |
| | Mode 3 | | | | X | | X | MG1 treibt ersten Leistungsausgang an; Drehzahl MG1 fest | MG2 treibt Vorgelegewelle und/oder Abtrieb an; Drehzahl MG2 variabel |
| | Mode 4 | | X | X | | | X | MG1 treibt ersten Leistungsausgang an; Drehzahl MG1 fest | MG2 treibt Vorgelegewelle und/oder Abtrieb an; Drehzahl MG2 variabel |
| | Mode 5 | X | | X | | X | | MG1 treibt Vorgelegewelle und/oder Abtrieb an; Drehzahl MG2 variabel | MG2 treibt Vorgelegewelle und/oder Abtrieb an; Drehzahl MG2 variabel |
| | Mode 6 | X | X | | | | | MG1 treibt Vorgelegewelle und/oder Abtrieb an; Drehzahl MG2 variabel | MG2 treibt Vorgelegewelle und/oder Abtrieb an; Drehzahl MG2 variabel |
| | Mode 7 | X | | X | | | | MG1 treibt Vorgelegewelle und/oder Abtrieb an; Drehzahl MG2 variabel | MG2 treibt Vorgelegewelle und/oder Abtrieb an; Drehzahl MG2 variabel |
| | Mode 8 | X | | X | | X | X | MG1 treibt Abtrieb und/oder Vorgelegewelle und/oder ersten Leistungsausgang an; Drehzahl MG1 fest | MG2 treibt Abtrieb und/oder Vorgelegewelle und/oder ersten Leistungsausgang an; Drehzahl MG2 variabel |
| | Mode 9 | X | X | | | | X | MG1 treibt Abtrieb und/oder Vorgelegewelle und/oder ersten Leistungsausgang an; Drehzahl MG1 fest | MG2 treibt Abtrieb und/oder Vorgelegewelle und/oder ersten Leistungsausgang an; Drehzahl MG2 variabel |
| | Mode 10 | X | | X | | | X | MG1 treibt Abtrieb und/oder Vorgelegewelle und/oder ersten Leistungsausgang an; Drehzahl MG1 fest | MG2 treibt Abtrieb und/oder Vorgelegewelle und/oder ersten Leistungsausgang an; Drehzahl MG2 variabel |

Die Modi können durch Öffnen und Schliessen der zu den genannten Bezugszeichen zugehörigen Schaltelemente oder Koppelelemente und den Betrieb der Energiemaschinen wie in Tabelle 3 dargestellt realisiert werden. Die Modi können durch Öffnen und Schliessen des ersten Schaltelements (210) und/oder des zweiten Schaltelements (324) und/oder dritten Schaltelements (326) und/oder des vierten Schaltelements (602) und/oder fünften Schaltelements (220) und/oder sechsten Schaltelements (234) und das Betreiben der ersten und zweiten Energiemaschine (Bezugszeichen 50, 56 bzw. MG1 und MG2) wie in Tabelle 3 dargestellt realisiert werden.

Vorteilhafterweise kann dadurch eine Antriebsvorrichtung, bevorzugt eine elektrische Antriebsvorrichtung, besonders bevorzugt eine rein elektrische Antriebsvorrichtung dargestellt werden, mithilfe derer bei geöffnetem ersten Schaltelement, die erste Energiemaschine unabhängig von der zweiten Energiemaschine den ersten Leistungsausgang antreiben kann und die zweite Energiemaschine unabhängig von der ersten Energiemaschine den Abtrieb über die erste und/oder zweite Übersetzungseinheit oder die Vorgelegewelle antreiben kann. Ausserdem verfügt die Antriebsvorrichtung zusätzlich über zwei voneinander unabhängig Übersetzungen, die durch das zweite, dritte und vierte Schaltelement lastschaltbar sind, wodurch die zweite Energiemaschine kompakter ausgeführt werden kann. Zudem können bei geschlossenem erstem Schaltelement die Leistungen beider Energiemaschinen an die erste und/oder zweite Übersetzungseinheit abgeführt werden. Ebenso kann vorteilhafterweise durch die zweite Übersetzungseinheit wenigstens ein weiterer stufenloser Modus mit vorzugsweise synchron schaltbarem Umschaltpunkt genutzt werden, wodurch beide Energiemaschinen kompakter ausführbar sind. Zudem kann bei geschlossenem erstem Schaltelement bei konstanter Drehzahl der ersten Energiemaschine Leistung an den ersten Leistungsausgang übertragen werden und gleichzeitig durch Drehzahlveränderung an der zweiten Energiemaschine eine von null ausgehend stufenlose Drehzahl an die erste und/oder zweite Übersetzungseinheit oder die Vorgelegewelle eingestellt werden bei gleichzeitiger Leistungsübertragung an die Antriebsvorrichtung, insbesondere die erste und/oder zweite Übersetzungseinheit oder die Vorgelegewelle. Hierbei kann durch die zweite Übersetzungseinheit wenigstens ein weiterer stufenloser Modus mit vorzugsweise synchronem Umschaltpunkt genutzt werden. Vorteilhafterweise wird hierdurch ein effizienterer und kompakterer Antriebsstrang ermöglicht.

In Ausgestaltung der Erfindung ist die zweite Übersetzungseinheit im Leistungsfluss und/oder Kraftfluss und/oder Drehmomentfluss nach der ersten Übersetzungseinheit angeordnet.

In Ausgestaltung der Erfindung umfasst die Antriebsvorrichtung eine Leistungselektronik. Mit der Leistungselektronik kann Leistung, insbesondere elektrische Leistung, zwischen der ersten und/oder zweiten Energiemaschine, insbesondere einem ersten und/oder zweiten Elektromotor, und/oder einem Energiespeicher übertragbar sein. Die Antriebsvorrichtung oder die Achse oder die Arbeitsmaschine kann die Leistungselektronik und/oder den oder die Energiespeicher umfassen. Die Leistungselektronik kann in der Steuereinheit integriert sein oder als externe Einheit(en) von der Steuereinheit ansteuerbar sein. Die Leistungselektronik kann ein elektronisches Steuergerät und/oder einen Inverter und/oder einen Spannungswandler umfassen. Im Betrieb kann der Inverter und/oder der Spannungswandler die Spannung des Energiespeichers in eine Spannung oder Energie oder Leistung umwandeln, welche die erste und/oder zweite Energiemaschine benötigen. Zum Aufladen des Energiespeichers kann dieser Vorgang umgekehrt werden. Der Energiespeicher kann vom elektronischen Steuergerät ansteuerbar sein, um elektrische Energie und/oder Leistung zu speichern und/oder an die erste und/oder zweite Energiemaschine, insbesondere den ersten und/oder zweiten Elektromotor, abzugeben. Die Steuereinheit oder das elektronische Steuergerät und/oder die erste und/oder zweite Energiemaschine, insbesondere der erste und/oder zweite Elektromotor, können mit der Leistungselektronik und/oder dem Energiespeicher elektrisch verbunden und/oder elektrisch koppelbar oder gekoppelt sein. Die Leistungselektronik, insbesondere das elektronische Steuergerät, kann in die Steuereinheit integriert sein. Die erste und/oder zweite Energiemaschine können als Generator ausgebildet sein, und insbesondere in einem Rekuperationsbetrieb den Energiespeicher aufladen. Der oder die Energiespeicher kann oder können mit der ersten und/oder zweiten Energiemaschine, insbesondere dem ersten und/oder zweiten Elektromotor, elektrisch verbunden und/oder elektrisch koppelbar sein. Der Energiespeicher kann ein elektrischer Energiespeicher sein. Der Energiespeicher kann die ersten und/oder zweiten Energiemaschine, insbesondere den ersten und/oder zweiten Elektromotor mit Energie, insbesondere elektrischer Energie versorgen. Der Energiespeicher kann mit der ersten und/oder zweiten Energiemaschine, insbesondere den ersten und/oder zweiten Elektromotor, verbunden und/oder koppelbar sein, insbesondere elektrisch verbunden und/oder elektrisch koppelbar sein. Der Energiespeicher kann als eine Batterie und/oder ein Akku und/oder eine Superkondensator und/oder eine Brennstoffzelle und/oder eine sonstige Vorrichtung zur Speicherung von elektrischer Energie ausgebildet sein. Vorteilhafterweise können dadurch die oben genannten Vorteil erreicht werden.

In Ausgestaltung der Erfindung weisen die erste und/oder zweite Übersetzungseinheit einen Durchgang oder mehrere Durchgänge, insbesondere einen oder mehrere zentrale Durchgänge, für den Antrieb, insbesondere die Eingangswelle, auf. Der Antrieb, insbesondere die Eingangswelle, kann zusätzlich als eine Zapfwellen-Antriebswelle (PTO-Antriebswelle) ausgebildet sein, insbesondere auch verwendbar sein. Der Antrieb, insbesondere die Eingangswelle, und die Zapfwellen-Antriebswelle können als eine Welle, insbesondere eine gemeinsame Welle, ausgebildet sein. Der Antrieb, insbesondere die Eingangswelle, kann als Vollwelle ausgeführt sein. Der Durchgang oder die Durchgänge, insbesondere der oder die zentralen Durchgänge, kann oder können als eine oder mehrere Wellendurchführungen, insbesondere eine oder mehrere zentrale Wellendurchführungen, für den Antrieb, insbesondere die Eingangswelle, ausgebildet sein. Die erste und/oder zweite Übersetzungseinheit können also eine oder mehrere Wellendurchführung, insbesondere eine oder mehrere zentrale Wellendurchführung, für den Antrieb, insbesondere die Eingangswelle, aufweisen. Die Sonne des Planetenkoppelgetriebes und/oder die erste und zweite Sonne des ersten und zweiten Planetengetriebes und/oder die Sonne des dritten Planetengetriebes und/oder die erste und/oder zweite und/oder dritte Stirnradstufe können jeweils Durchgänge, insbesondere Wellendurchführungen, für den Antrieb, insbesondere die Eingangswelle, aufweisen. Auf diese Weise ist eine direkte und damit besonders energieeffiziente Übertragung des Drehmoments und/oder der Kraft und/oder der Drehzahl zum ersten Leistungsausgang der Antriebsvorrichtung oder Arbeitsmaschine möglich.

In Ausgestaltung der Erfindung ist die erste Energiemaschine mit einem ersten Leistungsausgang verbindbar oder verbunden, insbesondere mit dem fünften oder durch das fünfte Schaltelement mit dem ersten Leistungsausgang verbindbar oder verbunden. Der erste Leistungsausgang kann eine Zapfwelleneinheit umfassen oder als Zapfwelleneinheit ausgebildet sein. Die Zapfwelleneinheit kann ein Zapfwellengetriebe und/oder eine Zapfwelle umfassen. Die erste Energiemaschine kann über den Antrieb, insbesondere die Eingangswelle, mit dem fünften Schaltelement verbunden sein. Das fünfte Schaltelement kann mit dem ersten Leistungsausgang, insbesondere dem Zapfwellengetriebe und/oder der Zapfwelle, verbunden sein. Das fünfte Schaltelement kann den Antrieb, insbesondere die Eingangswelle, mit dem ersten Leistungsausgang, insbesondere dem Zapfwellengetriebe und/oder der Zapfwelle, verbinden. Der erste Leistungsausgang, bevorzugt die Zapfwelleneinheit, besonders bevorzugt das Zapfwellengetriebe, kann also antriebsseitig, insbesondere über oder durch das fünfte Schaltelement, mit dem Antrieb, insbesondere der Eingangswelle, und/oder der Zapfwellen-Antriebswelle verbindbar oder verbunden sein. Ausserdem kann der erste Leistungsausgang, bevorzugt die Zapfwelleneinheit, besonders bevorzugt das Zapfwellengetriebe, abtriebsseitig mit der Zapfwelle verbindbar oder verbunden sein. Der erste Leistungsausgang kann mit der ersten Energiemaschine antreibbar sein. Ein wesentlicher Vorteil dieser Erfindung ist, dass bei geöffnetem erstem Schaltelement die erste Energiemaschine unabhängig von der zweiten Energiemaschine den ersten Leistungsausgang antreiben kann. Ausserdem kann gleichzeitig die zweite Energiemaschine unabhängig von der ersten Energiemaschine die Antriebsvorrichtung, insbesondere die erste und/oder zweite Übersetzungseinheit, antreiben. Zudem kann bei geschlossenem erstem Schaltelement bei konstanter Drehzahl der ersten Energiemaschine Leistung an den ersten Leistungsausgang und/oder die erste und/oder zweite Übersetzungseinheit übertragen werden und gleichzeitig durch Drehzahlveränderung an der zweiten Energiemaschine eine von null ausgehend stufenlose Drehzahl an der Antriebsvorrichtung, insbesondere der ersten und/oder zweiten Übersetzungseinheit, eingestellt und/oder verstellt werden. Dabei kann gleichzeitig ein Leistungsübertragung an die Antriebsvorrichtung, insbesondere die erste und/oder zweite Übersetzungseinheit erfolgen. Vorteilhafterweise wird hierdurch ein effizienterer und kompakterer Antriebsstrang ermöglicht. Ausserdem kann dadurch vorteilhafterweise eine modulare und/oder konstruktiv einfache Ausgestaltung der Antriebsvorrichtung, insbesondere des ersten Leistungsausgangs, erreicht werden.

In Ausgestaltung der Erfindung ist der Abtrieb und/oder die erste Übersetzungseinheit mit einer Vorgelegewelle verbindbar oder verbunden. Die erste Übersetzungseinheit, bevorzugt der zweite Eingang und/oder die erste Sonne des ersten Planetengetriebes, kann direkt oder über eine oder mit einer oder durch eine dritte Übersetzungsstufe, beispielsweise eine oder mehrere fünfte Stirnradstufen oder ein drittes Zahnradpaar oder drei oder mehr Zahnräder oder ein sechstes Planetengetriebe oder ein sonstiges Getriebe, mit der Vorgelegewelle verbindbar oder verbunden sein. Alternativ oder zusätzlich kann aber auch die zweite Energiemaschine direkt oder über eine oder mit einer oder durch eine vierte Übersetzungsstufe, beispielsweise eine oder mehrere sechste Stirnradstufen und/oder ein viertes Zahnradpaar und/oder drei oder mehr Zahnräder und/oder ein siebtes Planetengetriebe und/oder ein sonstiges Getriebe, und/oder die zweite Übersetzungsstufe mit der Vorgelegewelle verbindbar oder verbunden sein. Alternativ kann die zweite Energiemaschine aber auch über die erste Übersetzungseinheit, bevorzugt den zweiten Eingang und/oder die erste Sonne des ersten Planetengetriebes, über die oder mit der oder durch die dritte Übersetzungsstufe mit der Vorgelegewelle verbindbar oder verbunden sein. Die Antriebsvorrichtung kann das sechste Schaltelement umfassen. Die zweite Energiemaschine und/oder erste Übersetzungseinheit kann über oder durch das sechste Schaltelement mit der Vorgelegewelle verbindbar oder verbunden sein. Das sechste Schaltelement kann auf oder an der Vorgelegewelle angeordnet sein, insbesondere mit der Vorgelegewelle verbindbar sein. Der Abtrieb kann direkt oder über eine oder mit einer oder durch eine fünfte Übersetzungsstufe, beispielsweise eine siebte Stirnradstufe oder ein fünftes Zahnradpaar oder drei oder mehr Zahnräder oder ein achtes Planetengetriebe oder ein sonstiges Getriebe, mit der Vorgelegewelle verbindbar oder verbunden sein. Ausserdem kann die Vorgelegewelle mit dem Fahrantrieb, insbesondere dem Vorderachsantrieb, verbunden sein. Die Vorgelegewelle kann mit einer weiteren Übersetzungsstufe, beispielsweise einer weiteren Stirnradstufe oder einem Zahnradpaar oder drei oder mehr Zahnräder oder einem weiteren Planetengetriebe oder einem sonstigen Getriebe, und/oder einem weiteren Schaltelement mit einer weiteren Welle verbindbar oder verbunden sein. Die Vorgelegewelle oder die weitere Welle kann mit dem ersten Differenzialgetriebe oder dem Vorderachsdifferenzial verbunden sein. Die Vorgelegewelle kann eine Vollwelle sein. Die Vorgelegewelle und/oder der Antrieb, insbesondere die Eingangswelle, und/oder der Abtrieb, insbesondere die Ausgangswelle, können koaxial zueinander angeordnet sein. Dadurch kann vorteilhafterweise über das sechste Schaltelement ein zusätzlicher Anfahrgang realisiert werden.

In Ausgestaltung der Erfindung umfasst die Antriebsvorrichtung eine Steuereinheit. Die Steuereinheit wird oben und unten im Detail beschrieben.

Die Erfindung betrifft weiter eine Achse, insbesondere eine elektrisch angetriebene Achse, für eine Arbeitsmaschine, umfassend eine Antriebsvorrichtung, insbesondere eine Antriebsvorrichtung nach einem der Ansprüche 1 bis 11. Die Antriebsvorrichtung kann an der Achse angeordnet oder in die Achse integriert sein.

Die Erfindung betrifft weiter eine Getriebegehäuseanordnung mit einer Antriebsvorrichtung, insbesondere einer Antriebsvorrichtung nach einem der Ansprüche 1 bis 11. Die Getriebegehäuseanordnung umfasst ein erstes Gehäusemodul mit der ersten Übersetzungseinheit, wobei das erste Gehäusemodul eine eingangsseitige Gehäusewand und eine ausgangsseitigen Gehäusewand aufweist. Die eingangsseitige und ausgangsseitige Gehäusewand des ersten Gehäusemoduls können jede Gehäusewand des ersten Gehäusemoduls sein. Die eingangsseitige Gehäusewand des ersten Gehäusemoduls weist mindestens eine erste Eingangsöffnung, insbesondere eine erste und zweite Eingangsöffnung auf. Die erste Eingangsöffnung, insbesondere die erste und zweite Eingangsöffnung, können zum Anbinden und/oder Verbinden der Eingänge der ersten Übersetzungseinheit ausgebildet sein. Die ausgangsseitige Gehäusewand des ersten Gehäusemoduls weist mindestens eine erste Ausgangsöffnung, insbesondere eine erste und zweite Ausgangsöffnung auf. Die erste Ausgangsöffnung kann zum Anbinden und/oder Verbinden des ersten Ausgangs, insbesondere auch des zweiten Ausgangs, der ersten Übersetzungseinheit mit dem dritten Eingang, insbesondere auch des vierten Eingangs, der zweiten Übersetzungseinheit ausgebildet sein. Die zweite Ausgangsöffnung kann zum Anbinden und/oder Verbinden des zweiten Ausgangs der ersten Übersetzungseinheit mit dem vierten Eingang der zweiten Übersetzungseinheit ausgebildet sein. Die Arbeitsmaschine kann die Getriebegehäuseanordnung umfassen.

In der ersten Eingangsöffnung der eingangsseitigen Gehäusewand des ersten Gehäusemoduls kann oder können der erste und zweite Eingang angeordnet sein. Im Speziellen können sich der erste und zweite Eingang, insbesondere das erste und zweite Antriebselement, durch die erste Eingangsöffnung erstrecken. In der ersten Eingangsöffnung kann aber auch der erste Eingang und in der zweiten Eingangsöffnung der zweite Eingang angeordnet sein. Im Speziellen kann sich der erste Eingang, insbesondere das erste Antriebselement, durch die erste Eingangsöffnung erstrecken und der zweite Eingang, insbesondere das zweite Antriebselement, durch die zweite Eingangsöffnung erstrecken.

In der ersten Ausgangsöffnung der ausgangsseitigen Gehäusewand des ersten Gehäusemoduls kann oder können der erste und zweite Ausgang angeordnet sein. Im Speziellen können sich der erste und zweite Ausgang, insbesondere das erste und zweite Abtriebselement, durch die erste Ausgangsöffnung erstrecken. In der ersten Ausgangsöffnung kann aber auch der erste Ausgang und in der zweiten Ausgangsöffnung der zweite Ausgang angeordnet sein. Im Speziellen kann sich der erste Ausgang, insbesondere das erste Abtriebselement, durch die erste Ausgangsöffnung erstrecken und der zweite Ausgang, insbesondere das zweite Abtriebselement, durch die zweite Ausgangsöffnung erstrecken.

Im Speziellen kann die erste Übersetzungseinheit im ersten Gehäusemodul angeordnet sein. Im ersten Gehäusemodul können ausserdem die erste und/oder zweite Energiemaschine und/oder die zweiten und/oder vierte Übersetzungsstufe und/oder zumindest teilweise die Vorgelegewelle und/oder zumindest teilweise der Abtrieb angeordnet sein. Die Vorgelegewelle kann in der ersten Eingangsöffnung oder einer dritten Eingangsöffnung der eingangsseitigen Gehäusewand des ersten Gehäusemoduls und/oder der ersten Ausgangsöffnung oder einer dritten Ausgangsöffnung der ausgangsseitigen Gehäusewand des ersten Gehäusemoduls angeordnet sein. Im Speziellen kann sich die Vorgelegewelle durch die erste oder dritte Eingangsöffnung und/oder die erste oder dritte Ausgangsöffnung erstrecken. Das erste Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die erste Übersetzungseinheit, insbesondere Komponenten der ersten Übersetzungseinheit, lagerbar sein. Zusätzlich können die erste und/oder zweite Energiemaschine und/oder die zweiten und/oder vierte Übersetzungsstufe und/oder zumindest teilweise die Vorgelegewelle und/oder zumindest teilweise der Abtrieb an und/oder auf und/oder in den Lagerstellen lagerbar sein.

Die eingangsseitige oder eine weitere eingangsseitige und die ausgangsseitige oder eine weitere ausgangsseitige Gehäusewand des ersten Gehäusemoduls können eine erste und zweite Durchgangsöffnung, insbesondere zentrale erste und zweite Durchgangsöffnungen, für den Antrieb, insbesondere die Eingangswelle, aufweisen.

Die eingangsseitige und ausgangsseitige Gehäusewand des ersten Gehäusemoduls können aber auch als eine gemeinsame Gehäusewand des ersten Gehäusemoduls, insbesondere eine erste gemeinsame Gehäusewand, ausgebildet sein. Die gemeinsame Gehäusewand des ersten Gehäusemoduls kann mindestens die erste Eingangsöffnung, insbesondere die erste und zweite und/oder dritte Eingangsöffnung, und mindestens die erste Ausgangsöffnung, insbesondere die erste und zweite und/oder dritte Ausgangsöffnung, und insbesondere eine gemeinsame Durchgangsöffnung umfassen. Wesentlich ist, dass sich durch die Eingangsöffnungen des ersten Gehäusemoduls die Eingänge oder deren Antriebselemente und durch die Ausgangsöffnung der Abtrieb erstrecken. Vorteilhafterweise kann die Gehäuseanordnung dadurch auf einfache Art und Weise anbindbar sein und/oder modular aufgebaut sein.

Die Getriebegehäuseanordnung kann ein zweites Gehäusemodul mit der zweiten Übersetzungseinheit aufweisen. Das zweite Gehäusemodul kann eine eingangsseitige Gehäusewand und eine ausgangsseitigen Gehäusewand aufweisen. Die eingangsseitige Gehäusewand des zweiten Gehäusemoduls weist mindestens eine weitere Eingangsöffnung, insbesondere eine vierte Eingangsöffnung oder eine vierte und fünfte Eingangsöffnung auf. Die vierte Eingangsöffnung kann zum Anbinden und/oder Verbinden des dritten und/oder vierten Eingangs der zweiten Übersetzungseinheit mit dem ersten und/oder zweiten Ausgang der ersten Übersetzungseinheit ausgebildet sein. Die fünfte Eingangsöffnung kann zum Anbinden und/oder Verbinden des vierten Eingangs der zweiten Übersetzungseinheit mit dem zweiten Ausgang der ersten Übersetzungseinheit ausgebildet sein. In der vierten Eingangsöffnung der eingangsseitigen Gehäusewand des zweiten Gehäusemoduls kann der dritte und/oder vierte Eingang und/oder der erste und/oder zweite Ausgang angeordnet sein. Im Speziellen können sich der dritte und/oder vierte Eingang, insbesondere das dritte und/oder vierte Antriebselement oder das erste und/oder zweite Abtriebselement, und/oder der erste und/oder zweite Ausgang, insbesondere das erste und/oder zweite Abtriebselement, durch die vierte Eingangsöffnung, erstrecken.

In der fünften Eingangsöffnung, der eingangsseitigen Gehäusewand des zweiten Gehäusemoduls kann der vierte Eingang und/oder der zweite Ausgang angeordnet sein. Im Speziellen können sich der vierte Eingang, insbesondere das vierte Antriebselement oder das zweite Abtriebselement, und/oder der zweite Ausgang, insbesondere das zweite Abtriebselement, durch die fünfte Eingangsöffnung erstrecken.

Die ausgangsseitige Gehäusewand des zweiten Gehäusemoduls kann eine weitere Ausgangsöffnung, insbesondere eine dritte Ausgangsöffnung, aufweisen. In der dritten Ausgangsöffnung der ausgangsseitigen Gehäusewand des zweiten Gehäusemoduls kann der Abtrieb, insbesondere die Ausgangswelle, angeordnet sein. Im Speziellen kann sich der Abtrieb, insbesondere die Ausgangswelle, durch die dritte Ausgangsöffnung erstrecken.

Im Speziellen kann die zweite Übersetzungseinheit und der Abtrieb im zweiten Gehäusemodul angeordnet sein. Im zweiten Gehäusemodul können ausserdem die erste und/oder zweite Energiemaschine und/oder die erste und/oder zweite Übersetzungsstufe und/oder zumindest teilweise die Vorgelegewelle angeordnet sein. Die Vorgelegewelle kann in einer sechsten Eingangsöffnung der eingangsseitigen Gehäusewand des zweiten Gehäusemoduls angeordnet sein. Im Speziellen kann sich die Vorgelegewelle durch die sechste Eingangsöffnung erstrecken. Das zweite Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die zweite Übersetzungseinheit, insbesondere Komponenten der zweiten Übersetzungseinheit, und der Abtrieb lagerbar sein. Zusätzlich können die erste und/oder zweite Energiemaschine und/oder die erste und/oder zweite Übersetzungsstufe und/oder zumindest teilweise die Vorgelegewelle an und/oder auf und/oder in den Lagerstellen lagerbar sein. Insbesondere auch hier wird der geringe Montageaufwand und hohe Grad an Kompatibilität und Variabilität gegenüber herkömmlichen Getriebegehäuseanordnungen deutlich.

Die eingangsseitige oder eine weitere eingangsseitige Gehäusewand des zweiten Gehäusemoduls können eine dritte Durchgangsöffnung, insbesondere eine zentrale dritte Durchgangsöffnung, für den Antrieb, insbesondere die Eingangswelle, aufweisen. Die ausgangsseitige oder eine weitere ausgangsseitige Gehäusewand des zweiten Gehäusemoduls können eine vierte Durchgangsöffnung, insbesondere eine zentrale vierte Durchgangsöffnung, für den Antrieb, insbesondere die Eingangswelle, aufweisen. Die eingangsseitige und ausgangsseitige Gehäusewand des zweiten Gehäusemoduls können aber auch als eine gemeinsame Gehäusewand des zweiten Gehäusemoduls, insbesondere eine zweite gemeinsame Gehäusewand, ausgebildet sein. Die gemeinsame Gehäusewand des zweiten Gehäusemoduls kann mindestens die vierte Eingangsöffnung, insbesondere die vierte und fünfte Eingangsöffnung, und die zweite Ausgangsöffnung, und insbesondere eine weitere gemeinsame Durchgangsöffnung umfassen. Auf diese Weise ist eine direkte und damit besonders energieeffiziente Übertragung des Drehmoments und/oder der Kraft und/oder der Drehzahl zu einem ersten Leistungsausgang der Antriebsvorrichtung oder Achse oder Arbeitsmaschine möglich.

Ebenso können die ausgangsseitige Gehäusewand des ersten Gehäusemoduls und die eingangsseitige Gehäusewand des zweiten Gehäusemoduls als eine gemeinsame Gehäusewand des ersten und zweiten Gehäusemoduls ausgebildet sein. Die gemeinsame Gehäusewand des ersten und zweiten Gehäusemoduls kann als gemeinsame Öffnungen die dritte und/oder vierte Eingangsöffnung und die zweite und dritte Durchgangsöffnung als eine gemeinsame Durchgangsöffnung, insbesondere eine gemeinsame zentrale Durchgangsöffnung, umfassen.

Das erste Gehäusemodul kann mit dem zweiten Gehäusemodul verbindbar sein, bevorzugt die eingangsseitige Gehäusewand des zweiten Gehäusemoduls und die ausgangsseitige Gehäusewand des ersten Gehäusemoduls miteinander verbindbar oder verbunden sein. Das erste und zweite Gehäusemodul können mit oder durch eine oder mehrere Befestigungsflächen und Gehäuseflansche miteinander verbunden, bevorzugt aneinander befestigt, besonders bevorzugt lösbar aneinander befestigt sein. Dabei kann das erste Gehäusemodul eine oder mehrere Befestigungsflächen und das zweite Gehäusemodul eine oder mehrere Gehäuseflansche umfassen. Ebenso kann auch umgekehrt das erste Gehäusemodul eine oder mehrere Gehäuseflansche und das zweite Gehäusemodul eine oder mehrere Befestigungsflächen umfassen. Alternativ können das erste und zweite Gehäusemodul mehrere Gehäuseflansche und mehrere Befestigungsflächen umfassen.

Die Eingangsöffnungen und/oder Ausgangsöffnungen und/oder Durchgangsöffnungen können beispielsweise Öffnungen oder Löcher oder Durchgänge für die Eingänge und Ausgänge der ersten und zweiten Übersetzungseinheiten und den Abtrieb, und insbesondere den Antrieb und/oder die Vorgelegewelle sein. Im Speziellen können die Eingangsöffnungen und/oder Ausgangsöffnungen und/oder Durchgangsöffnungen jeweils Wellendurchführungen, insbesondere zentrale Wellendurchführungen, ausgebildet sein. Insbesondere die erste und zweite Übersetzungseinheit können dadurch über die Eingangsöffnungen und/oder Ausgangsöffnungen miteinander verbindbar sein. Weitere Anschlussmöglichkeiten für weitere Gehäusemodule können an der Gehäusewand des ersten und/oder zweiten Gehäusemoduls vorgesehen sein, um beispielsweise das erste und/oder zweite Differenzialgetriebe oder den ersten Leistungsausgang an die sich durch die ausgangsseitige Gehäusewand des ersten Gehäusemoduls erstreckenden Antrieb und/oder Abtrieb anschließen zu können. Das erste und zweite Gehäusemodule können entlang einer Längsachse der Getriebegehäuseanordnung, und insbesondere einer Längsachse der Arbeitsmaschine, angeordnet sein. Die Längsachse der Getriebegehäuseanordnung und die Längsachse der Arbeitsmaschine können identisch oder parallel sein.

Die Getriebegehäuseanordnung kann somit vorteilhafterweise modular aufgebaut sein. Modular soll in diesem Zusammenhang bedeuten, dass die Getriebegehäuseanordnung aus mehreren Gehäusemodulen zusammengesetzt ist und für jede der oben beschriebenen Übersetzungseinheiten ein Gehäusemodul ausgebildet ist, welches im Zusammenbau mit den anderen Gehäusemodulen die gesamte Getriebegehäuseanordnung darstellt. Die benachbarten und/oder aneinander anliegenden Gehäusewände können dabei als gemeinsame Gehäusewände ausgebildet sein. Eine derartige Anordnung ermöglicht, dass sich ein Wechsel der ersten und/oder zweiten Übersetzungseinheit leicht und kostengünstig ausführen lässt, ohne die gesamte Antriebsvorrichtung komplett demontieren zu müssen. Hier werden die Vorteile einer Getriebeanordnung im Hinblick auf einen geringeren Montageaufwand, hohen Grad an Kompatibilität und Variabilität deutlich. Im Weiteren kann vorteilhafterweise kann durch die Getriebegehäuseanordnung die Antriebsvorrichtung modular angeordnet und/oder modular aufgebaut sein.

Die Erfindung betrifft weiter eine Arbeitsmaschine mit einer Achse, insbesondere einer Achse nach Anspruch 12, oder eine Antriebsvorrichtung, insbesondere eine Antriebsvorrichtung nach einem der Ansprüche 1 bis 11, oder einer Getriebegehäuseanordnung, insbesondere eine Getriebegehäuseanordnung nach Anspruch 13. Die Arbeitsmaschine kann eine Baumaschine oder ein Zugfahrzeug, bevorzugt ein landwirtschaftliches Zugfahrzeug, beispielsweise ein Traktor oder Schlepper sein. Die Arbeitsmaschine weist die oben beschriebenen Vorteile der Antriebsvorrichtung und/oder Getriebegehäuseanordnung auf.

Die Arbeitsmaschine umfasst die Antriebsvorrichtung und/oder die Achse und/oder die Getriebegehäuseanordnung. Die Antriebsvorrichtung ist zum Antreiben der Arbeitsmaschine ausgebildet. Die Arbeitsmaschine kann eine, zwei oder mehrere Achse(n) umfassen. Im Speziellen kann die Antriebsvorrichtung an oder in die Achse, insbesondere in die erste und/oder zweite Fahrzeugachse integriert sein. Die Arbeitsmaschine kann mit einer Drehzahl und/oder Kraft und/oder einem Drehmoment des ersten und/oder zweiten Variators und/oder Motors antreibbar sein.

Die Steuereinheit kann zur Steuerung und/oder Regelung, insbesondere zum Einstellen und/oder Verstellen, der Arbeitsmaschine, insbesondere des Motors und/oder des ersten und/oder zweiten Variators eingerichtet sein. Die Arbeitsmaschine kann eine Ein- und Ausgabeeinheit umfassen. Die Steuereinheit kann mit der Ein- und Ausgabeeinheit signalverbunden und/oder wirkend gekoppelt und/oder signalübertragend und/oder datenleitend verbunden sein, und/oder mit der Ein- und Ausgabeeinheit ansteuerbar und/oder einstellbar und/oder verstellbar sein. Die Ein- und Ausgabeeinheit kann in die Steuereinheit oder umgekehrt integriert sein. Der Bediener der Arbeitsmaschine kann mit der oder durch die Ein- und Ausgabeeinheit beispielsweise eine Geschwindigkeit der Arbeitsmaschine einstellen und/oder verstellen.

Die Arbeitsmaschine kann ausserdem eines oder mehrere Hilfsaggregate umfassen, beispielsweise eine Pumpe und/oder einen Kühler etc.. Die Hilfsaggregate können ein Bestandteil der Hydraulik des Antriebsvorrichtung sein. Die Arbeitsmaschine kann anstatt der Antriebsvorrichtung den ersten Leistungsausgang, insbesondere die Zapfwelleneinheit umfassen. Die Steuereinheit kann konfiguriert sein, die Antriebsvorrichtung und/oder die Achse und/oder Arbeitsmaschine mit einem Fahrsignal einzustellen und/oder zu verstellen und/oder anzusteuern und mit dem oder basierend auf dem Fahrsignal eine Geschwindigkeit der Arbeitsmaschine einzustellen und/oder zu verstellen, insbesondere zu erhöhen oder zu verringern. Die Arbeitsmaschine kann das oder die Bodeneingriffsmittel umfassen. Die Bodeneingriffsmittel können die Arbeitsmaschine auf dem Boden abstützen und/oder tragen. Ein Zugfahrzeugrahmen der Arbeitsmaschine, insbesondere ein erstes und zweites Rahmenelement, kann sich auf die Bodeneingriffsmittel abstützen. Die Bodeneingriffsmittel können Räder oder Raupen oder Ketten sein. Die Bodeneingriffsmittel können insbesondere Vorderräder und Hinterräder sein. Die Arbeitsmaschine kann einen Geschwindigkeitssensor, beispielsweise einen Drehzahlsensor, zur Erfassung einer Geschwindigkeit der Arbeitsmaschine umfassen. Im Speziellen kann die Steuereinheit konfiguriert sein, eine Kraft und/oder ein Drehmoment und/oder eine Drehzahl des Motors und/oder des ersten und/oder zweiten Variators mit dem Fahrsignal einzustellen und/oder zu verstellen und/oder anzusteuern.

In Ausgestaltung der Erfindung umfasst die Arbeitsmaschine zwei Rahmenelemente, insbesondere ein erstes und ein zweites Rahmenelement. Die die Antriebsvorrichtung, bevorzugt die Getriebegehäuseanordnung, besonders bevorzugt das erste und/oder zweite Gehäusemodul, ist an, insbesondere zwischen, den Rahmenelementen angeordnet. Die Rahmenelemente, insbesondere das erste und zweite Rahmenelement, können parallel zur Längsachse der Arbeitsmaschine angeordnet sein. Die Getriebegehäuseanordnung, insbesondere das erste und zweite Gehäusemodule, können entlang der Längsachse der Arbeitsmaschine angeordnet sein. Die Längsachse der Getriebegehäuseanordnung und die Längsachse der Arbeitsmaschine können identisch oder parallel sein. Das erste und/oder zweite Gehäusemodul können zwischen den Rahmenelementen angeordnet sein, insbesondere auch an diesen befestigt und/oder gelagert sein. Ebenso kann die Zapfwelleneinheit an den Rahmenelementen angeordnet sein, insbesondere an diesen befestigt und/oder gelagert sein.

Die Schaltelemente, insbesondere deren Ventile oder Ventileinrichtungen oder Aktuatoren, und/oder der Energiespeicher und/oder die Leistungselektronik und/oder den ersten und/oder zweiten Variator und/oder der Motor und/oder der erste Leistungsausgang, insbesondere die Zapfwelleneinheit, können mit der Steuereinheit ansteuerbar und/oder einstellbar und/oder verstellbar, bevorzugt steuerbar und/oder regelbar sein. Die Steuereinheit kann Signale zur Steuerung des Betriebs der Antriebsvorrichtung und/oder der Achse und/oder der Arbeitsmaschine versenden und/oder empfangen. Zweckmäßigerweise können die Signale über ein geeignetes Datenkommunikationsnetzwerk bereitgestellt werden, beispielsweise eines, das dem ISOBUS- und/oder CAN-Standard entspricht. Die Steuereinheit kann als ein elektronisches Modul, ein eingebettetes System, eine Recheneinheit, ein Computer, als ein Modul zum Steuern und/oder Regeln der Antriebsvorrichtung und/oder der Achse und/oder der Arbeitsmaschine ausgebildet sein. Die Steuereinheit kann einen oder mehrere Prozessoren, einen Speicher und/oder alle Software, Hardware, Algorithmen, Anschlüsse, insbesondere auch Sensoren, umfassen, die für die Steuerung und/oder Regelung der Antriebsvorrichtung und/oder der Achse und/oder der Arbeitsmaschine erforderlich sind. Verfahren können als Programm oder Algorithmus ausgebildet sein, welche auf und/oder mit der Steuereinheit ausführbar sind. Die Steuereinheit kann jedes Gerät umfassen, das Daten von verschiedenen Sensoren analysiert, Daten vergleichen und die erforderlichen Entscheidungen treffen, um den Betrieb der Antriebsvorrichtung und/oder der Achse und/oder der Arbeitsmaschine und die erforderlichen Aufgaben zur Steuerung und/oder Regelung des Betriebs der Antriebsvorrichtung und/oder der Achse und/oder der Arbeitsmaschine, zu steuern und/oder zu regeln und/oder auszuführen. Die Steuereinheit kann mit den Bauteilen der Antriebsvorrichtung und/oder der Achse und/oder der Arbeitsmaschine, also insbesondere dem ersten Leistungsausgang und/oder den Schaltelementen, insbesondere den Ventilen oder Ventileinrichtungen oder Aktuatoren der Schaltelemente und/oder der Energiespeicher und/oder die Leistungselektronik und/oder der erste und/oder zweite Variator und/oder der Motor und/oder den Sensoren, beispielsweise der Geschwindigkeitssensor und/oder der oder den Drehzahl- und/oder Drehmomentsensor(en) signalverbunden und/oder wirkend gekoppelt und/oder signalübertragend und/oder datenleitend verbunden sein. Unter einer signalverbunden und/oder wirkend gekoppelten und/oder signalübertragenden und/oder datenleitenden Verbindung kann dabei unter anderem verstanden werden, dass ein Austausch von Signalen bzw. Daten zwischen den verbundenen Bauteilen und der Steuereinheit stattfinden kann. Signale können beispielsweise von der Steuereinheit empfangen und versendet werden und/oder verarbeitet und/oder bearbeitet werden. Die Verbindung zwischen der Steuereinheit sowie den Bauteilen bzw. Komponenten der Antriebsvorrichtung und/oder der Achse und/oder der Arbeitsmaschine kann kabelgebunden, insbesondere also mit Kabel, und/oder kabellos, also per Funk, beispielsweise mit Bluetooth oder WLAN realisiert sein. Die Kommunikation kann beispielsweise mittels Isobus, CAN-Bus oder ähnlichem erfolgen. Die Steuereinheit kann unmittelbar mit, insbesondere mit der in einer Kabine der Arbeitsmaschine angeordneten, Ein- und Ausgabeeinheit in Verbindung stehen, durch welche von einer Bedienperson eingegebene Daten an die Steuereinheit übertragen oder von dieser empfangen und ausgegeben werden können. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines ersten Ausführungsbeispiels einer erfindungsgemässen Arbeitsmaschine mit einer erfindungsgemässen Antriebsvorrichtung, und
- Fig. 2: eine schematische Darstellung des ersten Ausführungsbeispiels der erfindungsgemässen Antriebsvorrichtung, und
- Fig. 3: eine schematische Darstellung eines zweiten Ausführungsbeispiels der erfindungsgemässen Antriebsvorrichtung, und
- Fig. 4: eine schematische Darstellung eines dritten Ausführungsbeispiels der erfindungsgemässen Antriebsvorrichtung, und
- Fig. 5: eine detaillierte Darstellung eines weiteren Ausführungsbeispiels der ersten Übersetzungseinheit, und
- Fig. 6: eine detaillierte Darstellung eines weiteren Ausführungsbeispiels der zweiten Übersetzungseinheit, und
- Fig. 7: eine detaillierte Darstellung der zweiten Übersetzungseinheit gemäss Figur 4, und
- Fig. 8: eine schematische Darstellung eines ersten Ausführungsbeispiels einer erfindungsgemässen Getriebegehäuseanordnung, und
- Fig. 9: eine schematische Darstellung eines zweiten Ausführungsbeispiels einer erfindungsgemässen Getriebegehäuseanordnung, und
- Fig. 10: eine schematische Darstellung eines dritten Ausführungsbeispiels einer erfindungsgemässen Getriebegehäuseanordnung, und
- Fig. 11: eine schematische Darstellung eines vierten Ausführungsbeispiels einer erfindungsgemässen Getriebegehäuseanordnung, und
- Fig. 12: eine schematische Darstellung eines fünften Ausführungsbeispiels einer erfindungsgemässen Getriebegehäuseanordnung, und
- Fig. 13: eine schematische Darstellung eines sechsten Ausführungsbeispiels einer erfindungsgemässen Getriebegehäuseanordnung, und
- Fig. 14: eine schematische Darstellung eines weiteren Ausführungsbeispiels einer erfindungsgemässen Arbeitsmaschine mit einer erfindungsgemässen Getriebegehäuseanordnung und Antriebsvorrichtung.

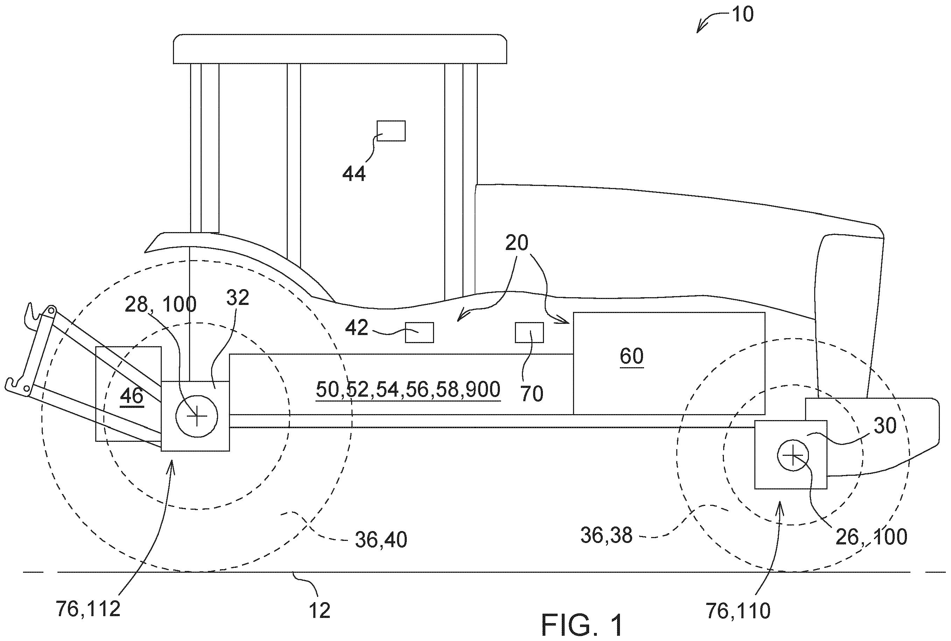

Figur 1 zeigt eine schematische Darstellung eines ersten Ausführungsbeispiels einer erfindungsgemässen Arbeitsmaschine 10, hier eines landwirtschaftlichen Zugfahrzeugs oder Traktors bzw. Schleppers, mit einer erfindungsgemässen Antriebsvorrichtung 20. Die Arbeitsmaschine 10 ist mit der Antriebsvorrichtung 20 antreibbar.

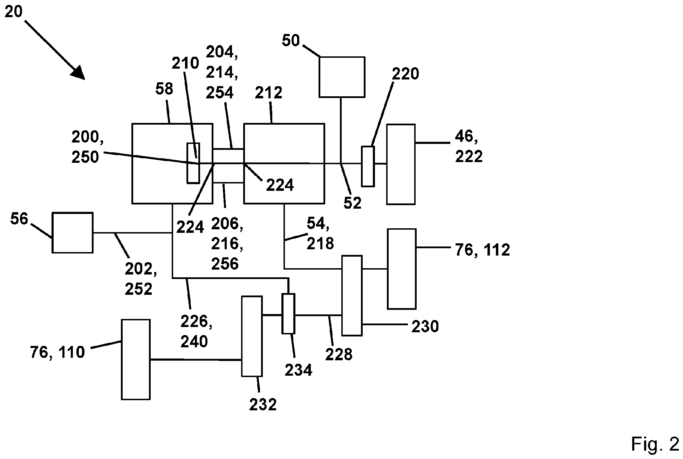

Die Antriebsvorrichtung 20 umfasst einen Antrieb 52, der insbesondere als Antriebswelle oder Eingangswelle ausgebildet sein kann, und einen Abtrieb 54, der insbesondere als eine Abtriebswelle oder Ausgangswelle ausgebildet sein kann, und eine erste und zweite Energiemaschine 50, 56, und eine erste Übersetzungseinheit 58. Die erste Übersetzungseinheit 58 weist einen ersten und zweiten Eingang 200, 202 (siehe Figuren 2 bis 13) und einen ersten und zweiten Ausgang 204, 206 (siehe Figuren 2 bis 13) auf. Der Antrieb 52 ist mit dem Abtrieb 54 über die erste Übersetzungseinheit 58 verbindbar oder verbunden. Ausserdem ist die erste Energiemaschine 50 mit dem ersten Eingang 200 durch ein erstes oder mit einem ersten Schaltelement 210 (siehe Figuren 2 bis 7) verbindbar oder verbunden. Die zweite Energiemaschine 56 ist mit dem zweiten Eingang 202 verbunden.

Die Arbeitsmaschine 10, insbesondere die Antriebsvorrichtung 20, umfasst eine erste Fahrzeugachse 26 und eine zweite Fahrzeugachse 28. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Die Arbeitsmaschine 10, insbesondere die Antriebsvorrichtung 20, kann einen Fahrantrieb 76, insbesondere einen Vorderachsantrieb und einen Hinterachsantrieb umfassen. Die Arbeitsmaschine 10 kann eines oder mehrere Bodeneingriffsmittel 36, hier in Form von Rädern 38, 40 dargestellt, aufweisen, welche mit einem Untergrund 12 zur Übertragung von Antriebskräften in Eingriff stehen und/oder durch die sich die Arbeitsmaschine 10 auf dem Untergrund 12 abstützt. Der Fahrantrieb 76 kann die erste Fahrzeugachse 26 und/oder die zweite Fahrzeugachse 28 und/oder ein erstes Differenzialgetriebe 30 und/oder ein zweites Differenzialgetriebe 32 und/oder das oder die Bodeneingriffsmittel 36 umfassen. Die Arbeitsmaschine 10, insbesondere die Antriebsvorrichtung 20, kann einen Vorderachsantrieb 110 aufweisen, der die erste Fahrzeugachse 26 und/oder das erste Differenzialgetriebe 30, also insbesondere ein Vorderachsdifferenzial, und/oder das oder die Bodeneingriffsmittel 36 umfassen kann. Ebenso kann die Arbeitsmaschine 10, oder insbesondere der Antriebsstrang 20, einen Hinterachsantrieb 112 aufweisen, der die zweite Fahrzeugachse 28 und/oder das zweite Differenzialgetriebe 32, also insbesondere ein Hinterachsdifferenzial, und/oder das oder die Bodeneingriffsmittel 36 umfassen kann. Die erste Fahrzeugachse 26 kann mit dem ersten Differenzialgetriebe 30 verbunden sein. Die zweite Fahrzeugachse 28 kann mit dem zweiten Differenzialgetriebe 32 verbunden sein.

Der Abtrieb 54 kann mit dem Fahrantrieb 76, insbesondere dem ersten und/oder zweiten Differenzialgetriebe 32, insbesondere nur mit dem zweiten Differenzialgetriebe 32, verbunden sein. Der Abtrieb 54 kann über das zweite oder mit dem zweiten Differenzialgetriebe 32 mit der zweiten Fahrzeugachse verbunden sein. Über das erste oder mit dem ersten Differenzialgetriebe 30 und/oder das zweite oder mit dem zweiten Differenzialgetriebe 32 kann eine Kraft und/oder ein Drehmoment und/oder eine Drehzahl vom Abtrieb 54 an die erste und/oder zweite Fahrzeugachse 26, 28, und somit insbesondere an die Bodeneingriffsmittel 36, übertragbar sein.

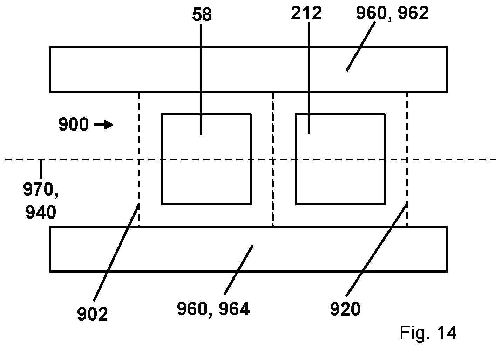

Die erste und zweite Energiemaschine 50, 56 kann insbesondere als erster und zweiter Elektromotor ausgeführt sein. Mit der Antriebsvorrichtung 20, insbesondere der ersten und zweiten Energiemaschine 50, 56, kann eine Drehbewegung und/oder Kraft und/oder ein Drehmoment und/oder eine Drehzahl erzeugbar und, insbesondere über die erste und/oder eine zweite Übersetzungseinheit 58, 212 und den Abtrieb 54, auf die erste und/oder zweite Fahrzeugachse 26, 28 übertragbar sein. Die erste und/oder zweite Fahrzeugachse 26, 28 wandeln die Drehbewegung und/oder Kraft und/oder das Drehmoment und/oder die Drehzahl in eine Drehbewegung und/oder Kraft und/oder Drehmoment und/oder Drehzahl eines oder mehrerer Bodeneingriffsmittel 36 und somit in einen Schub der Arbeitsmaschine 10 um. Die Arbeitsmaschine 10 kann ausserdem ein Zugfahrzeugrahmen, insbesondere ein erstes und zweites Rahmenelement 960, 962, 964 (siehe Figur 14) aufweisen, wobei das Fahrgestell insbesondere von den an der ersten und/oder zweiten Fahrzeugachse 28, 30 aufgehängten Bodeneingriffsmitteln 36, insbesondere den Rädern 38, 40 getragen werden kann. Im Speziellen sind ein erstes Paar Räder 38 an der ersten Fahrzeugachse 26 und ein zweites Paar Räder 40 an der zweiten Fahrzeugachse 28 angeordnet sein. Dabei können die Durchmesser der Rädern 38, 40 voneinander abweichen, insbesondere kann der Durchmesser des ersten Paars Räder 38 kleiner als der Durchmesser des zweiten Paars Räder 40 sein. Alternativ können die Bodeneingriffsmittel 36 auch als Raupen oder Ketten ausgebildet und angeordnet sein. Ausserdem kann die Arbeitsmaschine 10, alternativ oder zusätzlich die Antriebsvorrichtung 20 oder eine Achse 100, eine Leistungselektronik 70 umfassen, um die elektrische Leistung bzw. Energie zwischen der ersten und zweiten Energiemaschine 50, 56, insbesondere dem ersten und zweiten Elektromotor, und einem Energiespeicher 60 zu übertragen. Die Arbeitsmaschine 10 kann in der dargestellten Ausführungsform rein elektrisch oder rein hydraulisch angetrieben sein. Die Arbeitsmaschine 10, insbesondere die Antriebsvorrichtung 20, kann einen ersten Leistungsausgang 46 umfassen. Der erste Leistungsausgang kann eine Zapfwelleneinheit 222 umfassen. Der erste Leistungsausgang 46 kann zum Antreiben eines Arbeitsgeräts (nicht gezeigt) vorgesehen sein, das über eine Schnittstelle (z.B. Dreipunktschnittstelle) an der Arbeitsmaschine 10 anbringbar ist. Im Speziellen kann die Achse 100 die Antriebsvorrichtung 20 umfassen oder die Antriebsvorrichtung 20 an oder in dieser angeordnet sein, beispielsweise an der ersten und/oder zweiten Fahrzeugachse 26, 28. Der Energiespeicher 60 kann die elektrisch angetriebenen Komponenten der Antriebsvorrichtung 20, bevorzugt die erste und zweite Energiemaschine 50, 56, besonders bevorzugt den ersten und/oder zweiten Elektromotor, mit Strömen bzw. Spannungen geeigneter Frequenz und Amplituden, um gewünschte Ausgangsdrehzahlen oder -Drehmomente für den ersten Leistungsausgang 46 und/oder die Antriebsvorrichtung 20 bereitzustellen.

Die Arbeitsmaschine 10, insbesondere alternativ aber auch die Achse 100 oder die Antriebsvorrichtung 20, kann die Steuereinheit 42 und/oder eine Ein- und Ausgabeeinheit 44 umfassen. Die Steuereinheit 42 kann mit der Ein- und Ausgabeeinheit 44 signalverbunden und/oder wirkend gekoppelt und/oder signalübertragend und/oder datenleitend verbunden sein. Im Speziellen kann die Steuereinheit 42 unmittelbar mit der in einer Kabine der Arbeitsmaschine angeordneten Ein- und Ausgabeeinheit 44 Verbindung stehen, durch welche von einer Bedienperson eingegebene Daten an die Steuereinheit 42 übertragen oder von dieser empfangen und ausgegeben werden können. Die Antriebsvorrichtung 20, und/oder insbesondere die Arbeitsmaschine 10 oder die Achse 100, kann mit der Steuereinheit 42 einstellbar und/oder verstellbar sein. Die Steuereinheit 42 ist mit der ersten und zweiten Energiemaschine 50, 56 signalverbunden und/oder wirkend gekoppelt und/oder signalübertragend und/oder datenleitend verbunden. Die Steuereinheit 42 ist konfiguriert, die Drehzahl und/oder das Drehmoment und/oder die Kraft der Antriebsvorrichtung 20, insbesondere der ersten und zweiten Energiemaschine 50, 56, einzustellen und/oder zu verstellen, insbesondere diese anzusteuern und/oder zu steuern und/oder zu regeln.

Die Steuereinheit 42 kann konfiguriert sein, eine vorgebbare Drehzahl und/oder ein vorgebbares Drehmoment und/oder eine vorgebbare Kraft der Antriebsvorrichtung 20, insbesondere der ersten und zweiten Energiemaschine 50, 56 einzustellen und/oder zu verstellen, insbesondere diese anzusteuern und/oder zu steuern und/oder zu regeln. Die Steuereinheit 42 kann mit dem Energiespeicher 60 und/oder der Leistungselektronik 70 und/oder Sensoren der Antriebsvorrichtung 20 signalverbunden und/oder wirkend gekoppelt und/oder signalübertragend und/oder datenleitend verbunden sein. Die Steuereinheit 42 kann konfiguriert sein, die Antriebsvorrichtung 20, insbesondere alternativ oder zusätzlich die Achse 100 oder die Arbeitsmaschine 10, einzustellen und/oder zu verstellen, um die Drehzahl und/oder das Drehmoment und/oder die Kraft der ersten und zweiten Energiemaschine 50, 56 einzustellen und/oder zu verstellen, insbesondere zu steuern und/oder zu regeln.

Wesentlich für die Erfindung ist, dass durch die erste Übersetzungseinheit eine Antriebsvorrichtung realisiert werden kann, bei der wahlweise die erste Energiemaschine unabhängig von der zweiten Energiemaschine den ersten Leistungsausgang antreiben kann und gleichzeitig die zweite Energiemaschine unabhängig von der ersten Energiemaschine die Antriebsvorrichtung, insbesondere die erste und/oder zweite Übersetzungseinheit, und/oder den Abtrieb und/oder die Vorgelegewelle und/oder den Fahrantrieb antreiben kann, oder gleichzeitig die erste und die zweite Energiemaschine ausschließlich die Antriebsvorrichtung, insbesondere die erste und/oder zweite Übersetzungseinheit, und/oder den Abtrieb und/oder die Vorgelegewelle und/oder den Fahrantrieb antreiben können, oder die erste Energiemaschine bei konstanter Drehzahl Leistung an den ersten Leistungsausgang übertragen kann während gleichzeitig durch Drehzahlveränderung an der zweiten Energiemaschine eine von null ausgehend stufenlose Drehzahl an der ersten und/oder zweiten Übersetzungseinheit, und/oder dem Abtrieb und/oder der Vorgelegewelle und/oder dem Fahrantrieb eingestellt werden kann bei gleichzeitiger Leistungsübertragung an diese.

Figur 2 zeigt eine schematische Darstellung eines ersten Ausführungsbeispiels der erfindungsgemässen Antriebsvorrichtung 20. Die in Figur 2 gezeigte Antriebsvorrichtung 20 entspricht im Wesentlichen der in Figur 1 Antriebsvorrichtung 20, sodass im Folgenden lediglich auf Details und/oder Unterschiede eingegangen wird. Die in Figur 1 dargestellte Arbeitsmaschine 10 kann die in Figur 2 dargestellte Antriebsvorrichtung 20 umfassen.

Die Antriebsvorrichtung 20 gemäss Figur 2 umfasst den Antrieb 52 und den Abtrieb 54 und die erste und zweite Energiemaschine 50, 56. Ausserdem umfasst die Antriebsvorrichtung 20 die erste Übersetzungseinheit 58, wobei die erste Übersetzungseinheit 58 einen ersten und zweiten Eingang 200, 202, insbesondere ein erstes und zweites Antriebselement 250, 252, und einen ersten und zweiten Ausgang 204, 206, insbesondere ein erstes und zweites Abtriebselement 254, 256, aufweist. Der Antrieb 52 ist mit dem Abtrieb 54 über die erste Übersetzungseinheit 58, und insbesondere wahlweise zusätzlich eine zweite Übersetzungseinheit 212, verbindbar oder verbunden. Ausserdem ist die erste Energiemaschine 50 mit dem ersten Eingang 200 durch ein erstes Schaltelement 210 verbindbar oder verbunden und die zweite Energiemaschine 56 ist mit dem zweiten Eingang 202 verbunden.

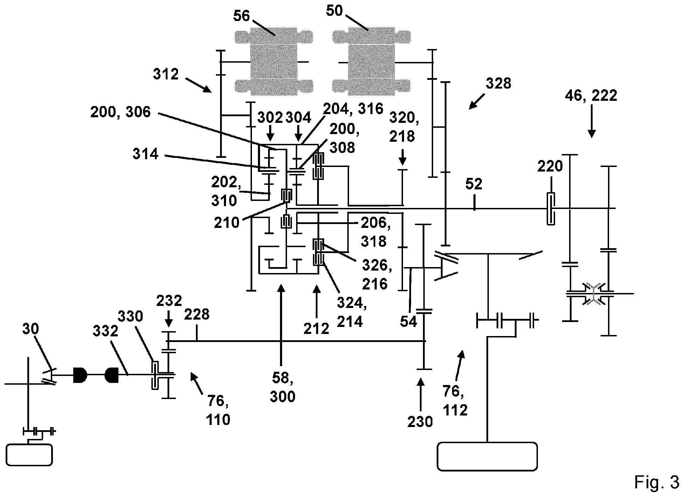

Die erste Übersetzungseinheit 58 kann als ein Planetenkoppelgetriebe 300 (siehe Figur 3) ausgebildet sein, insbesondere mit zwei verschiedenen Standübersetzungen. Alternativ oder zusätzlich kann die erste Übersetzungseinheit 58 mindestens ein erstes und/oder zweites Planetengetriebe 302, 304 (siehe Figuren 3, 4 und 5) umfassen, wobei das erste und zweite Planetengetriebe 302, 304 miteinander gekoppelt sein können. Im Speziellen kann die erste Übersetzungseinheit 58 ein erstes und zweites Planetengetriebe 302, 304 umfassen, wobei das erste und zweite Planetengetriebe 302, 304 miteinander gekoppelt sind. Die erste Übersetzungseinheit 58 kann somit 4 Freiheitsgrade oder mit anderen Worten ausgedrückt, zwei Eingänge, den ersten und zweiten Eingang 200, 202, und zwei Ausgänge, den ersten und zweiten Ausgang 204, 206, aufweisen.

Die erste Energiemaschine 50 kann als ein erster Elektromotor und/oder die zweite Energiemaschine 56 kann als ein zweiter Elektromotor ausgebildet sein. Die erste und zweite Energiemaschine 50, 56 können die Antriebsvorrichtung 20 mit einer Kraft und/oder einer Drehzahl und/oder einem Drehmoment antreiben. Die erste Energiemaschine 50 ist abtriebsseitig mit dem Antrieb 52 verbunden und der Antrieb 52 über oder mit dem ersten Schaltelement 210 mit der ersten Übersetzungseinheit 58, insbesondere dem ersten Eingang 200, insbesondere dem ersten Antriebselement 250, verbindbar. Die zweite Energiemaschine 56 ist abtriebsseitig mit dem zweiten Eingang 202, insbesondere dem zweiten Antriebselement 252, verbunden.

Die Antriebsvorrichtung 20 kann auch eine zweite Übersetzungseinheit 212 umfassen, die eine erste Stirnradstufe 320 und/oder eine zweite Stirnradstufe 500 und/oder ein Planetengetriebe, insbesondere ein drittes Planetengetriebe 600, und mindestens ein zweites und drittes Schaltelement 324, 326 umfassen. Die zweite Übersetzungseinheit 212 weist zwei Eingänge, insbesondere einen dritten und vierten Eingang 214, 216, und mindestens einen dritten Ausgang 218 auf. Der erste Ausgang 204 der ersten Übersetzungseinheit kann mit dem dritten Eingang 214 der zweiten Übersetzungseinheit 212 verbunden sein, beispielsweise mit einer oder durch eine Welle. Dadurch kann eine Kraft und/oder ein Drehmoment und/oder eine Drehzahl von der ersten zur zweiten Übersetzungseinheit 58, 212 übertragbar sein. Der zweite Ausgang 206 der ersten Übersetzungseinheit kann mit dem vierten Eingang 216 der zweiten Übersetzungseinheit 212 verbunden sein, beispielsweise mit einer oder durch eine Welle. Dadurch kann eine Kraft und/oder ein Drehmoment und/oder eine Drehzahl von der ersten zur zweiten Übersetzungseinheit 58, 212 übertragbar sein. Die zweite Übersetzungseinheit 212 ist im Drehmoment- und/oder Leistungsfluss nach der ersten Übersetzungseinheit 58 angeordnet.

Die Antriebsvorrichtung 20 kann ausserdem den ersten Leistungsausgang 46 umfassen. Die erste Energiemaschine 50 kann mit dem ersten Leistungsausgang 46 verbindbar oder verbunden sein, insbesondere mit dem fünften oder durch das fünfte Schaltelement 220 mit dem ersten Leistungsausgang 46 verbindbar oder verbunden sein. Der erste Leistungsausgang 46 kann eine Zapfwelleneinheit 222 umfassen. Die Zapfwelleneinheit 222 kann ein Zapfwellengetriebe und/oder eine Zapfwelle umfassen. Das fünfte Schaltelement 220 und/oder die Zapfwelleneinheit 222, insbesondere das Zapfwellengetriebe, kann antriebsseitig mit dem Antrieb 52 verbunden sein. Ausserdem kann die Zapfwelleneinheit 222, insbesondere das Zapfwellengetriebe, abtriebsseitig mit der Zapfwelle verbindbar oder verbunden sein. Die erste und/oder zweite Übersetzungseinheit 58, 212 können ausserdem einen Durchgang 224, insbesondere einen zentralen Durchgang, für den Antrieb 52, also insbesondere die Antriebswelle oder Eingangswelle aufweisen.

Der Abtrieb 54 und/oder die erste Übersetzungseinheit 58 können mit einer Vorgelegewelle 228 verbindbar oder verbunden sein. Der Abtrieb 54 kann beispielsweise über oder mit oder durch eine fünfte Übersetzungsstufe 230 mit der Vorgelegewelle 228 verbunden sein. Die erste Übersetzungseinheit 58 und/oder die zweite Energiemaschine 56 kann oder können beispielsweise über oder mit oder durch eine zweite und/oder dritte und/oder vierte Übersetzungsstufe 312, 226, 240 und/oder ein sechstes Schaltelement 234 mit der Vorgelegewelle 228 verbindbar oder verbunden sein. Der Abtrieb 54 kann ausserdem mit dem Fahrantrieb 76, insbesondere dem zweiten Differenzialgetriebe 32 verbunden sein. Die Vorgelegewelle 228 kann mit dem Fahrantrieb 76, insbesondere dem ersten Differenzialgetriebe 30 über oder mit oder durch eine sechste Übersetzungsstufe 232, beispielsweise eine achte Stirnradstufe oder ein sechstes Zahnradpaar oder drei oder mehr Zahnräder oder ein neuntes Planetengetriebe oder ein sonstiges Getriebe, verbunden sein. Die Vorgelegewelle 228 und/oder der Abtrieb 54, insbesondere die Ausgangswelle, kann oder können eine Vollwelle sein. Die Vorgelegewelle 228 und/oder der Abtrieb 54, insbesondere die Ausgangswelle, können koaxial zueinander angeordnet sein.

Figur 3 zeigt eine schematische Darstellung des zweiten Ausführungsbeispiels der erfindungsgemässen Antriebsvorrichtung 20. Die in Figur 3 gezeigte Antriebsvorrichtung 20 entspricht im Wesentlichen der in den Figuren 1 und 2 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 3 dargestellte Antriebsvorrichtung 20 umfassen.

Die erste Übersetzungseinheit 58 umfasst ein Planetenkoppelgetriebe 300, mit zwei verschiedenen Standübersetzungen. Die erste Übersetzungseinheit 58, insbesondere das Planetenkoppelgetriebe 300, umfasst ein erstes und zweites Planetengetriebe 302, 304, wobei die Planetengetriebe 302, 304 miteinander gekoppelt sind.

Das erste Hohlrad 306 des ersten Planetengetriebes 302 und der zweite Planetenträger 308 des zweiten Planetengetriebes 304 sind als der erste Eingang 200 ausgebildet und/oder sind der erste Eingang 200. Das erste Schaltelement 210 ist mit dem ersten Hohlrad 306 und dem zweiten Planetenträger 308 verbunden. Die erste Energiemaschine 50 ist über eine oder mit einer oder durch eine erste Übersetzungsstufe 328, vorliegend drei Zahnräder oder zwei Stirnradstufen mit dem Antrieb 52 und der Antrieb 52 über das oder durch das erste Schaltelement 210 mit dem ersten Eingang 200 verbindbar oder verbunden. Das erste Sonnenrad 310 des ersten Planetengetriebes 302 ist als der zweite Eingang 202 ausgebildet und/oder ist der zweite Eingang 202. Die zweite Energiemaschine 56 ist über eine oder mit einer oder durch eine zweite Übersetzungsstufe 312, vorliegend drei Zahnräder oder zwei Stirnradstufen, mit dem zweiten Eingang 202, insbesondere dem ersten Sonnenrad 310 verbunden. Der erste Ausgang 204 ist mit dem ersten Planetenträger 314 des ersten Planetengetriebes 302 und dem zweiten Hohlrad 316 des zweiten Planetengetriebes 304 verbunden. Der zweite Ausgang 206 ist mit der zweiten Sonne 318 des zweiten Planetengetriebes 304 verbunden.

Die zweite Übersetzungseinheit 212 umfasst die erste Stirnradstufe 320, die gleichzeitig als dritter Ausgang 218 ausgebildet ist, und das zweite und dritte Schaltelement 324, 326. Das zweite Schaltelement 324 ist mit dem ersten Ausgang 204 der ersten Übersetzungseinheit 58 verbunden und das dritte Schaltelement 326 ist mit dem zweiten Ausgang 206 der ersten Übersetzungseinheit 58 verbunden. Der erste Ausgang 204 ist durch das zweite Schaltelement 324 mit der ersten Stirnradstufe 320 verbindbar oder verbunden und der zweite Ausgang 206 ist durch das dritte Schaltelement 326 mit der ersten Stirnradstufe 320 verbindbar oder verbunden. Ausserdem ist das zweite und/oder dritte Schaltelement 324, 326 über die oder mit der ersten Stirnradstufe 320 mit dem Abtrieb 54 verbindbar oder verbunden.

Die erste Energiemaschine 50 ist mit dem ersten Leistungsausgang 46, insbesondere der Zapfwelleneinheit 222, insbesondere über die erste Übersetzungsstufe 328 verbindbar oder verbunden. Im Speziellen ist die erste Energiemaschine 50 mit dem ersten Leistungsausgang 46 insbesondere mit dem fünften oder durch das fünfte Schaltelement 220 verbindbar oder verbunden. Der Abtrieb 54 ist über oder mit oder durch die fünfte Übersetzungsstufe 230, vorliegend eine siebte Stirnradstufe, mit der Vorgelegewelle 228 verbunden. Antrieb 52 und Abtrieb 54 sind koaxial und parallel zueinander angeordnet. Ebenso sind der Abtrieb 54 und die Vorgelegewelle 228 koaxial und parallel zueinander angeordnet. Die Vorgelegewelle 228 ist mit einer weiteren Welle 332 über oder mit oder durch die sechste Übersetzungsstufe 232, vorliegend eine achte Stirnradstufe, und/oder ein siebtes Schaltelement 330 verbunden. Die weitere Welle 332 ist mit dem ersten Differenzialgetriebe 30 verbindbar oder verbunden. Mit der Antriebsvorrichtung 20 gemäss Figur 3 können vorteilhafterweise die jeweils sechs Modi pro Drehrichtung des Abtriebs oder in Vorwärts- und Rückwärtsrichtung der Arbeitsmaschine gemäss Tabelle 1 (siehe oben) realisiert werden.

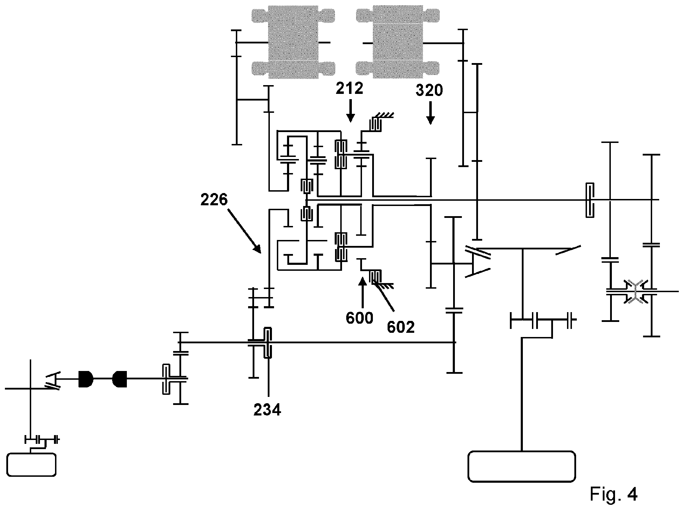

Figur 4 zeigt eine schematische Darstellung des dritten Ausführungsbeispiels der erfindungsgemässen Antriebsvorrichtung 20. Die in Figur 4 gezeigte Antriebsvorrichtung 20 entspricht im Wesentlichen der in den Figuren 1 bis 3 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 4 dargestellte Antriebsvorrichtung 20 umfassen.

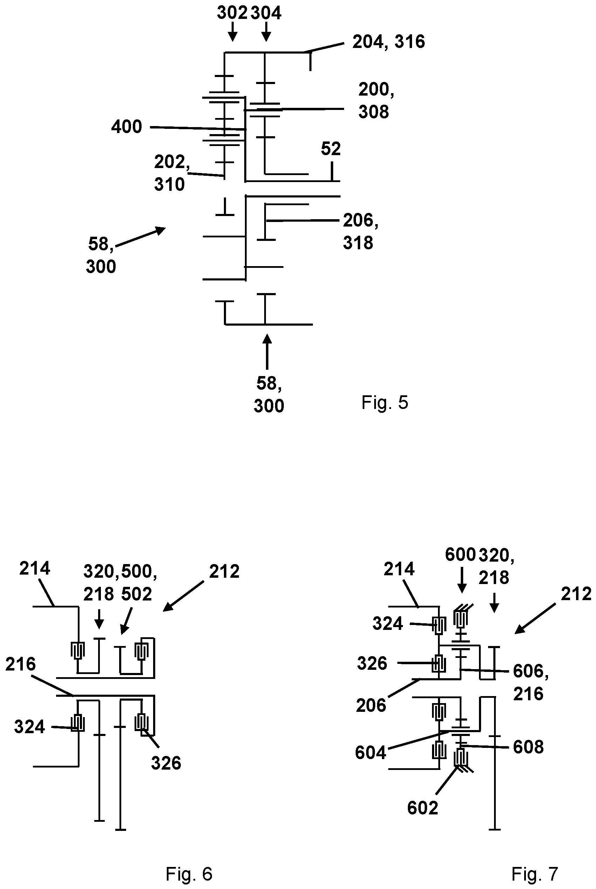

Zusätzlich zu der in Fig. 3 gezeigten Antriebsvorrichtung 20 ist die zweite Energiemaschine 56 über oder durch die zweite Übersetzungsstufe 312 mit der ersten Übersetzungseinheit 58 und der vierten Übersetzungsstufe 226, vorliegend zwei sechste Stirnradstufen, und das sechste Schaltelement 234 mit der Vorgelegewelle 228 verbindbar oder verbunden. Ausserdem umfasst die zweite Übersetzungseinheit 212 die erste Stirnradstufe 320 und das dritte Planetengetriebe 600 und das zweite und das dritte und das vierte Schaltelement 324, 326, 602. Eine detaillierte Beschreibung der zweiten Übersetzungseinheit 212 gemäss Figur 4 bzw. in dieser Ausführungsform ist in der Beschreibung zu Figur 7 zu finden. Mit der Antriebsvorrichtung 20 gemäss Figur 4 können vorteilhafterweise acht oder zehn Modi für die eine Drehrichtung des Abtriebs oder in Vorwärtsfahrrichtung der Arbeitsmaschine und acht oder zahn Modi für die andere Drehrichtung des Abtriebs oder in Rückwärtsfahrrichtung der Arbeitsmaschine gemäss Tabelle 3 realisiert werden.

Figur 5 zeigt eine schematische Darstellung eines weiteren Ausführungsbeispiels der ersten Übersetzungseinheit 58. Die in Figur 5 gezeigte ersten Übersetzungseinheit 58 entspricht im Wesentlichen der in den Figuren 1 bis 4 gezeigten ersten Übersetzungseinheit 58 der erfindungsgemässen Antriebsvorrichtung 20, sodass im Folgenden lediglich auf Details und/oder Unterschiede eingegangen wird. Die in Figuren 1 bis 4 dargestellte Antriebsvorrichtung 20 oder Achse 100 oder Arbeitsmaschine 10 kann die in Figur 5 dargestellte erste Übersetzungseinheit 58 umfassen.

Die erste Übersetzungseinheit 58, insbesondere das Planetenkoppelgetriebe 300, umfasst ein erstes und/oder zweites Planetengetriebe 302, 304, wobei die Planetengetriebe 302, 304 miteinander gekoppelt sind. Das erste Planetengetriebe 302 umfasst einen Doppelplanetenträger 400. Der erste Eingang 200 ist der Doppelplanetenträger 400 des ersten Planetengetriebes 302 und der zweite Planetenträger 308 des zweiten Planetengetriebes 304. Das erste Schaltelement 210 ist mit dem Doppelplanetenträger 400 und dem zweiten Planetenträger 308 verbunden. Der zweite Eingang 202 ist das erste Sonnenrad 310 des ersten Planetengetriebes 302. Der erste Ausgang 204 ist mit dem ersten Hohlrad 306 des ersten Planetengetriebes 302 und dem zweiten Hohlrad 316 des zweiten Planetengetriebes 304 verbunden. Der zweite Ausgang 206 ist mit der zweiten Sonne 318 des zweiten Planetengetriebes 304 verbunden.

Figur 6 zeigt eine schematische Darstellung eines weiteren Ausführungsbeispiels der zweiten Übersetzungseinheit 212. Die in Figur 6 gezeigte zweite Übersetzungseinheit 212 entspricht im Wesentlichen der in den Figuren 1 bis 5 gezeigten zweiten Übersetzungseinheit 212 der erfindungsgemässen Antriebsvorrichtung 20, sodass im Folgenden lediglich auf Details und/oder Unterschiede eingegangen wird. Die in den Figuren 1 bis 4 dargestellte Antriebsvorrichtung 20 oder Achse 100 oder Arbeitsmaschine 10 kann die in Figur 6 dargestellte zweite Übersetzungseinheit 212 umfassen.

Im Ausführungsbeispiel gemäss Figur 6 umfasst die zweite Übersetzungseinheit 212 die erste und zweite Stirnradstufe 320, 500 und das zweite und dritte Schaltelement 324, 326. Dabei ist der erste Ausgang 204 durch das oder über das zweite Schaltelement 324 mit der ersten Stirnradstufe 320 verbindbar und der zweite Ausgang 206 durch das dritte Schaltelement 326 mit der zweiten Stirnradstufe 500 verbindbar. Ausserdem ist das zweite Schaltelement 324 über die oder mit der ersten Stirnradstufe 320 mit dem Abtrieb 54 verbindbar oder verbunden. Ausserdem weist die zweite Übersetzungseinheit 212 den dritten und vierten Eingang 214, 216 und den dritten und vierten Ausgang 218, 502 auf. Die erste Stirnradstufe 320 ist gleichzeitig als dritter Ausgang 218 ausgebildet und die zweite Stirnradstufe 500 ist gleichzeitig als vierter Ausgang 502. Der dritte und vierte Ausgang 218, 502 sind mit dem Abtrieb 54 verbunden.

Figur 7 zeigt eine schematische Darstellung eines weiteren Ausführungsbeispiels der zweiten Übersetzungseinheit 212. Die in Figur 7 gezeigte zweite Übersetzungseinheit 212 entspricht im Wesentlichen der in den Figuren 1 bis 6 gezeigten zweiten Übersetzungseinheit 212 der erfindungsgemässen Antriebsvorrichtung 20, sodass im Folgenden lediglich auf Details und/oder Unterschiede eingegangen wird. Die in den Figuren 1 bis 4 dargestellte Antriebsvorrichtung 20 oder Achse 100 oder Arbeitsmaschine 10 kann die in Figur 7 dargestellte zweite Übersetzungseinheit 212 umfassen. Die in Figur 7 gezeigte zweite Übersetzungseinheit 212 entspricht im Wesentlichen der in Figur 4 gezeigten zweiten Übersetzungseinheit 212, sodass im Folgenden lediglich auf Details und/oder Unterschiede eingegangen wird. Die zweite Übersetzungseinheit 212 umfasst die erste Stirnradstufe 320 und das dritte Planetengetriebe 600. Ausserdem umfasst die zweite Übersetzungseinheit 212 das zweite und das dritte und das vierte Schaltelement 324, 326, 602. Das zweite Schaltelement 324 ist mit dem ersten Ausgang 204 der ersten Übersetzungseinheit 58 verbunden und gleichzeitig als dritter Eingang 214 der zweiten Übersetzungseinheit 212 ausgebildet.

Das dritte Schaltelement 326 ist mit dem zweiten Ausgang 206 der ersten Übersetzungseinheit 58 verbunden. Der erste Ausgang 204 ist durch das oder mit dem zweite Schaltelement 324 und der zweite Ausgang 206 durch das dritte Schaltelement 326 mit dem dritten Planetengetriebe 600, bevorzugt einer Komponente oder der gleichen Komponente des dritten Planetengetriebes 600, besonders bevorzugt dem dritten Planetenträger 604 des dritten Planetengetriebes 600 verbindbar. Das dritte Planetengetriebe 600, bevorzugt der dritte Planetenträger 604 des dritten Planetengetriebes 600, ist mit der ersten Stirnradstufe 320 verbunden.

Der zweite Ausgang 206 der ersten Übersetzungseinheit 58 ist mit dem dritten Planetengetriebe 600, bevorzugt einer Komponente des dritten Planetengetriebes 600, besonders bevorzugt der dritten Sonne 606 des dritten Planetengetriebes 600 verbunden. Gleichzeitig ist die dritte Sonne 606 als vierter Eingang 216 der zweiten Übersetzungseinheit 212 ausgebildet. Zusätzlich kann das dritte Schaltelement 326 als vierter Eingang 216 der zweiten Übersetzungseinheit 212 ausgebildet sein.

Das vierte Schaltelement 602, das hier beispielhaft als Bremse ausgebildet ist, ist mit dem dritten Planetengetriebe 600, bevorzugt einer Komponente des dritten Planetengetriebes 600, besonders bevorzugt dem dritten Hohlrad 608 des dritten Planetengetriebes 600 verbindbar oder verbunden. Das zweite und/oder dritte Schaltelement 324, 326 ist über die oder mit der ersten Stirnradstufe 320 mit dem Abtrieb 54, insbesondere der Ausgangswelle verbindbar oder verbunden. Ebenso ist das dritte Planetengetriebe 600, insbesondere der dritte Planetenträger 604 über die oder mit der ersten Stirnradstufe 320 mit dem Abtrieb 54 verbunden.

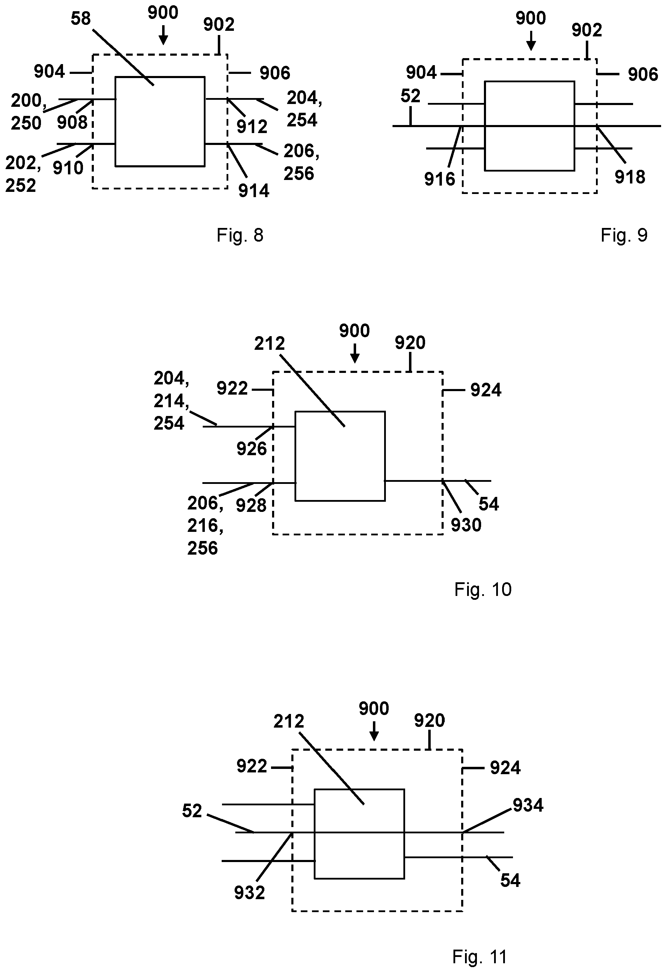

Figur 8 zeigt eine schematische Darstellung eines ersten Ausführungsbeispiel einer erfindungsgemässen Getriebegehäuseanordnung 900. Die in Figur 8 gezeigte Getriebegehäuseanordnung 900 kann die in den Figuren 1 bis 7 gezeigte Antriebsvorrichtung 20 oder Komponenten der erfindungsgemässen Antriebsvorrichtung 20 umfassen, sodass im Folgenden lediglich auf Details und/oder Unterschiede eingegangen wird. Die in den Figuren 1 bis 4 dargestellte Achse 100 oder Arbeitsmaschine 10 kann die in Figur 8 dargestellte Getriebegehäuseanordnung 900 umfassen.

Die Getriebegehäuseanordnung 900 umfasst ein erstes Gehäusemodul 902 mit der ersten Übersetzungseinheit 58. Im Speziellen ist die erste Übersetzungseinheit 58 im ersten Gehäusemodul 902 angeordnet. Das erste Gehäusemodul 902 weist eine eingangsseitige Gehäusewand 904 und eine ausgangsseitigen Gehäusewand 906 auf. Die eingangsseitige Gehäusewand 904 des ersten Gehäusemoduls 902 weist eine erste und zweite Eingangsöffnung 908, 910 auf. Die ausgangsseitige Gehäusewand 906 des ersten Gehäusemoduls 902 weist eine erste und zweite Ausgangsöffnung 912, 914 auf.

In der ersten Eingangsöffnung 908 ist der erste Eingang 200, insbesondere das erste Antriebselement 250, angeordnet. Im Speziellen kann sich der erste Eingang 200, insbesondere das erste Antriebselement 250, durch die erste Eingangsöffnung 908 erstrecken. Dadurch kann der erste Eingang 200, insbesondere das erste Antriebselement 250 mit der ersten Energiemaschine 56 verbindbar sein. In der zweiten Eingangsöffnung 910 ist der zweite Eingang 202, insbesondere das zweite Antriebselement 252, angeordnet. Im Speziellen kann sich der zweite Eingang 202, insbesondere das zweite Antriebselement 252, durch die zweite Eingangsöffnung 910 erstrecken. Dadurch kann der zweite Eingang 202, insbesondere das zweite Antriebselement 252 mit der zweiten Energiemaschine 56 verbindbar sein.

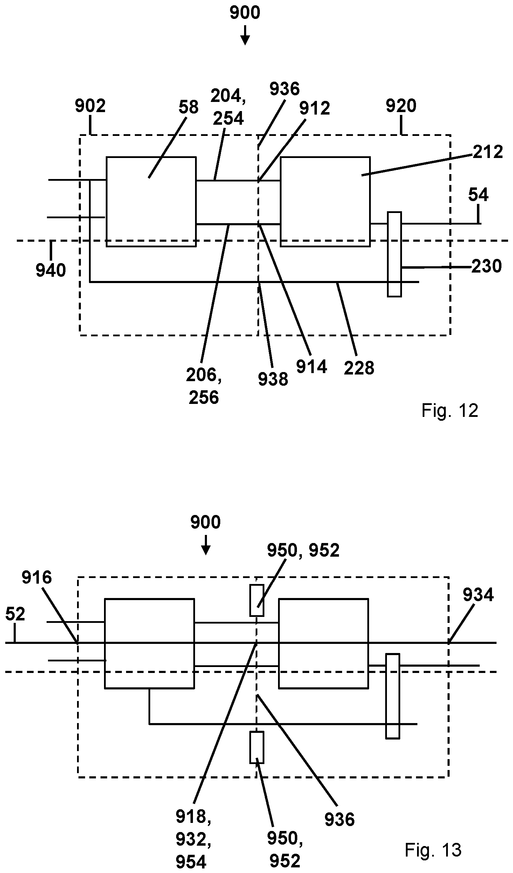

In der ersten Ausgangsöffnung 912 der ausgangsseitigen Gehäusewand 906 des ersten Gehäusemoduls 902 ist der erste Ausgang 204, insbesondere das erste Abtriebselement 254, angeordnet. Im Speziellen kann sich der erste Ausgang 204, insbesondere das erste Abtriebselement 254, durch die erste Ausgangsöffnung 912 erstrecken. Dadurch kann der erste Ausgang 204, insbesondere das erste Abtriebselement 254 mit der zweiten Übersetzungseinheit 212, insbesondere dem dritten Eingang 214 verbindbar sein. In der zweiten Ausgangsöffnung 914 ist der zweite Ausgang 206, insbesondere das zweite Abtriebselement 256, angeordnet. Im Speziellen kann sich der zweite Ausgang 206, insbesondere das zweite Abtriebselement 256, durch die zweite Ausgangsöffnung 914 erstrecken. Dadurch kann der zweite Ausgang 206, insbesondere das zweite Abtriebselement 256 mit der zweiten Übersetzungseinheit 212, insbesondere dem vierten Eingang 214 verbindbar sein. Im ersten Gehäusemodul 902 kann ausserdem zumindest teilweise die Vorgelegewelle 228 angeordnet sein (nicht gezeigt). Die Vorgelegewelle 228 kann in der ersten Eingangsöffnung 908 oder einer dritten Eingangsöffnung der eingangsseitigen Gehäusewand 904 des ersten Gehäusemoduls 902 angeordnet sein (nicht dargestellt). Im Speziellen kann sich die Vorgelegewelle 228 durch die erste Eingangsöffnung 908 oder die dritte Eingangsöffnung erstrecken. Zusätzlich kann die Vorgelegewelle 228 in einer dritten Ausgangsöffnung 930 der ausgangsseitigen Gehäusewand 906 des ersten Gehäusemoduls 902 angeordnet sein (siehe Figur 12). Im Speziellen kann sich die Vorgelegewelle 228 durch die dritte Ausgangsöffnung 930 erstrecken.

Figur 9 zeigt eine schematische Darstellung eines zweiten Ausführungsbeispiels einer erfindungsgemässen Getriebegehäuseanordnung 900. Die in Figur 9 gezeigte Getriebegehäuseanordnung 900 kann die in den Figuren 1 bis 7 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 9 gezeigte Getriebegehäuseanordnung 900 entspricht im Wesentlichen der in Figur 8 gezeigten Getriebegehäuseanordnung 900, sodass im Folgenden lediglich auf Details und/oder Unterschiede eingegangen wird. Die in den Figuren 1 bis 4 dargestellte Achse 100 oder Arbeitsmaschine 10 kann die in Figur 9 dargestellte Getriebegehäuseanordnung 900 umfassen.

Die eingangsseitige Gehäusewand 904 und die ausgangsseitige Gehäusewand 906 des ersten Gehäusemoduls 902 weisen eine erste und zweite Durchgangsöffnung 916, 918, insbesondere eine zentrale erste und zweite Durchgangsöffnung, für den Antrieb 52, insbesondere die Eingangswelle, auf. Der Antrieb 52 ist in der ersten und zweiten Durchgangsöffnung 916, 918 angeordnet. Im Speziellen kann sich der Antrieb 52 durch die erste und zweite Durchgangsöffnung 916, 918 erstrecken. Es können aber auch eine weitere eingangsseitige Gehäusewand und/oder eine weitere ausgangsseitige Gehäusewand des ersten Gehäusemoduls 902 eine erste und zweite Durchgangsöffnung 916, 918, insbesondere eine zentrale erste und zweite Durchgangsöffnung, für den Antrieb 52, insbesondere die Eingangswelle, aufweisen.

Figur 10 zeigt eine schematische Darstellung eines dritten Ausführungsbeispiels einer erfindungsgemässen Getriebegehäuseanordnung 900. Die in Figur 10 gezeigte Getriebegehäuseanordnung 900 kann die in den Figuren 1 bis 7 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 10 gezeigte Getriebegehäuseanordnung 900 entspricht im Wesentlichen der in den Figuren 8 bis 9 gezeigten Getriebegehäuseanordnung 900, sodass im Folgenden lediglich auf Details und/oder Unterschiede eingegangen wird. Die in den Figuren 1 bis 4 dargestellte Achse 100 oder Arbeitsmaschine 10 kann die in Figur 10 dargestellte Getriebegehäuseanordnung 900 umfassen.

Die Getriebegehäuseanordnung 900 umfasst ein zweites Gehäusemodul 920 mit der zweiten Übersetzungseinheit 212. Im Speziellen ist die zweite Übersetzungseinheit 212 im zweiten Gehäusemodul 920 angeordnet. Im zweiten Gehäusemodul 920 kann die zweite Übersetzungseinheit 212 und der Abtrieb 54 angeordnet sein. Das zweite Gehäusemodul 920 weist eine eingangsseitige Gehäusewand 922 und eine ausgangsseitigen Gehäusewand 924 auf. Die eingangsseitige Gehäusewand 922 des zweiten Gehäusemoduls 920 weist eine vierte und fünfte Eingangsöffnung 926, 928 auf. Die ausgangsseitige Gehäusewand 924 des zweiten Gehäusemoduls 920 weist eine weitere Ausgangsöffnung, insbesondere eine vierte Ausgangsöffnung 930, auf.

Die eingangsseitige Gehäusewand 922 des zweiten Gehäusemoduls 920 weist mindestens eine weitere Eingangsöffnung, insbesondere eine vierte Eingangsöffnung 926 oder eine vierte und fünfte Eingangsöffnung 926, 928 auf. Die vierte Eingangsöffnung 926 ist zum Anbinden und/oder Verbinden des dritten Eingangs 214 der zweiten Übersetzungseinheit 212 mit dem ersten Ausgang 204 der ersten Übersetzungseinheit 58 ausgebildet sein. Die fünfte Eingangsöffnung 928 ist zum Anbinden und/oder Verbinden des vierten Eingangs 216 der zweiten Übersetzungseinheit 212 mit dem zweiten Ausgang 206 der ersten Übersetzungseinheit 58 ausgebildet sein. In der vierten Eingangsöffnung 926 der eingangsseitigen Gehäusewand 922 des zweiten Gehäusemoduls 920 ist der dritte Eingang 214 und/oder der erste Ausgang 204 angeordnet. Im Speziellen können sich der dritte Eingang 214, insbesondere das dritte Antriebselement, und/oder der erste Ausgang 204, insbesondere das erste Abtriebselement 254, durch die vierten Eingangsöffnung 926 erstrecken. In der fünften Eingangsöffnung 928 der eingangsseitigen Gehäusewand 922 des zweiten Gehäusemoduls 920 ist der vierte Eingang 216 und/oder der zweite Ausgang 206 angeordnet. Im Speziellen können sich der vierte Eingang 216, insbesondere das vierte Antriebselement, und/oder der zweite Ausgang 206, insbesondere das zweite Abtriebselement 256, durch die fünfte Eingangsöffnung 928 erstrecken. In der vierten Ausgangsöffnung 930 ist der Abtrieb 54, insbesondere die Ausgangswelle, angeordnet. Im Speziellen kann sich der Abtrieb 54, insbesondere die Ausgangswelle, durch die vierte Ausgangsöffnung 930 erstrecken.

Die Vorgelegewelle 228 kann in einer sechsten Eingangsöffnung der eingangsseitigen Gehäusewand 922 des zweiten Gehäusemoduls 920 angeordnet sein (nicht dargestellt). Im Speziellen kann sich die Vorgelegewelle 228 durch die sechste Eingangsöffnung erstrecken.

Figur 11 zeigt eine schematische Darstellung eines vierten Ausführungsbeispiels einer erfindungsgemässen Getriebegehäuseanordnung 900. Die in Figur 11 gezeigte Getriebegehäuseanordnung 900 kann die in den Figuren 1 bis 7 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 11 gezeigte Getriebegehäuseanordnung 900 entspricht im Wesentlichen der in den Figuren 8 bis 10 gezeigten Getriebegehäuseanordnung 900, sodass im Folgenden lediglich auf Details und/oder Unterschiede eingegangen wird. Die in den Figuren 1 bis 4 dargestellte Achse 100 oder Arbeitsmaschine 10 kann die in Figur 11 dargestellte Getriebegehäuseanordnung 900 umfassen.

Die eingangsseitige Gehäusewand 922 und die ausgangsseitige Gehäusewand 924 des zweiten Gehäusemoduls 920 weisen eine dritte und vierte Durchgangsöffnung 932, 934, insbesondere eine zentrale dritte und vierte Durchgangsöffnung, für den Antrieb 52, insbesondere die Eingangswelle, auf. Der Antrieb 52 ist in der dritten und vierten Durchgangsöffnung 932, 934 angeordnet. Im Speziellen kann sich der Antrieb 52 durch die dritte und vierte Durchgangsöffnung 932, 934 erstrecken. Es können aber auch eine weitere eingangsseitige Gehäusewand und/oder eine weitere ausgangsseitige Gehäusewand des zweiten Gehäusemoduls 920 eine dritte und vierte Durchgangsöffnung 932, 934, insbesondere eine zentrale dritte und vierte Durchgangsöffnung, für den Antrieb 52, insbesondere die Eingangswelle, aufweisen.

Figur 12 zeigt eine schematische Darstellung eines fünften Ausführungsbeispiels einer erfindungsgemässen Getriebegehäuseanordnung 900. Die in Figur 12 gezeigte Getriebegehäuseanordnung 900 kann die in den Figuren 1 bis 7 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 12 gezeigte Getriebegehäuseanordnung 900 entspricht im Wesentlichen der in den Figuren 8 bis 11 gezeigten Getriebegehäuseanordnung 900, sodass im Folgenden lediglich auf Details und/oder Unterschiede eingegangen wird. Die in den Figuren 1 bis 4 dargestellte Achse 100 oder Arbeitsmaschine 10 kann die in Figur 12 dargestellte Getriebegehäuseanordnung 900 umfassen.

Die eingangsseitige Gehäusewand 904 des ersten Gehäusemoduls 902 und die ausgangsseitige Gehäusewand 924 des zweiten Gehäusemoduls 920 sind als eine gemeinsame Gehäusewand 936 des ersten und zweiten Gehäusemoduls 902, 920 ausgebildet. Das erste Gehäusemodul 902 kann mit dem zweiten Gehäusemodul 920 verbunden sein, insbesondere über die oder durch die gemeinsame Gehäusewand 936. Die gemeinsame Gehäusewand 936 des ersten und zweiten Gehäusemoduls 902, 920 weisen als gemeinsame Öffnungen die erste und zweite Eingangsöffnung 912, 914 und die dritte Ausgangsöffnung 930 auf.

Die erste und zweite Eingangsöffnung 912, 914 können die vierte und fünfte Eingangsöffnungen 926, 928 umfassen oder mit anderen Worten, die erste und zweite Eingangsöffnung 912, 914 und die vierte und fünfte Eingangsöffnungen 926, 928 können als gemeinsame Öffnungen ausgebildet sein. Die dritte Ausgangsöffnung 930 kann die sechste Eingangsöffnung umfassen oder mit anderen Worten, die dritte Ausgangsöffnung 930 und die sechste Eingangsöffnung 926, 928 können als gemeinsame Öffnungen ausgebildet sein.

Der erste und zweite Ausgang 204, 206, insbesondere das erste und zweite Abtriebselement 254, 255, sind in der ersten und zweiten Eingangsöffnung 912, 914 in der gemeinsamen Gehäusewand 936 angeordnet. Im Speziellen können sich der erste und zweite Eingang 204, 206, insbesondere das erste und zweite Abtriebselement 254, 256, durch die erste und zweite Eingangsöffnung 912, 914 erstrecken. Das erste und zweite Gehäusemodule 902, 920 sind entlang einer Längsachse 940 der Getriebegehäuseanordnung 900 angeordnet.

Die Vorgelegewelle 228 ist im ersten und zweiten Gehäusemodul 902, 920 angeordnet. Darüber hinaus ist die Vorgelegewelle 228 in der dritten Ausgangsöffnung 930 in der gemeinsamen Gehäusewand 936 angeordnet. Im Speziellen kann sich die Vorgelegewelle 228 durch die dritte Ausgangsöffnung 930 erstrecken. Ausserdem können der Abtrieb 54 und die Vorgelegewelle 228 durch die fünfte Übersetzungsstufe 230 miteinander verbindbar oder verbunden sein.

Figur 13 zeigt eine schematische Darstellung eines sechsten Ausführungsbeispiels einer erfindungsgemässen Getriebegehäuseanordnung 900. Die in Figur 13 gezeigte Getriebegehäuseanordnung 900 kann die in den Figuren 1 bis 7 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 13 gezeigte Getriebegehäuseanordnung 900 entspricht im Wesentlichen der in den Figuren 8 bis 12 gezeigten Getriebegehäuseanordnung 900, sodass im Folgenden lediglich auf Details und/oder Unterschiede eingegangen wird. Die in den Figuren 1 bis 4 dargestellte Achse 100 oder Arbeitsmaschine 10 kann die in Figur 13 dargestellte Getriebegehäuseanordnung 900 umfassen.

Das erste Gehäusemodul 902 ist mit dem zweiten Gehäusemodul 920 verbunden, insbesondere über die oder durch die gemeinsame Gehäusewand 936. Das erste und zweite Gehäusemodul 902, 920 sind mit oder durch eine oder mehrere Befestigungsflächen 950 und Gehäuseflansche 952 miteinander verbunden, bevorzugt aneinander befestigt, besonders bevorzugt lösbar aneinander befestigt. Die zweite Durchgangsöffnung 918 und die dritte Durchgangsöffnung 932 sind als eine gemeinsame Durchgangsöffnung, insbesondere eine zentrale gemeinsame Durchgangsöffnung, in der gemeinsamen Gehäusewand 936 ausgebildet.

Der Antrieb 52 ist in der ersten Durchgangsöffnung 916, der gemeinsamen Durchgangsöffnung 954 und der vierten Durchgangsöffnung 934 angeordnet. Im Speziellen kann sich der Antrieb 52 durch die erste Durchgangsöffnung 916 und die gemeinsame Durchgangsöffnung 954 und die vierte Durchgangsöffnung 934 erstrecken.

Figur 14 zeigt eine detaillierte schematische Darstellung eines weiteren Ausführungsbeispiels der erfindungsgemässen Arbeitsmaschine 10 mit einer erfindungsgemässen Getriebegehäuseanordnung 900. Die in Figur 14 gezeigte Getriebegehäuseanordnung 900 kann die in den Figuren 1 bis 7 gezeigte Antriebsvorrichtung 20 oder Komponenten der Antriebsvorrichtung 20, insbesondere die erste und/oder zweite Übersetzungseinheiten 58, 212 und/oder den ersten und zweiten Variator 50, 56 der erfindungsgemässen Antriebsvorrichtung 20, umfassen. Die in Figur 14 gezeigte Getriebegehäuseanordnung 900 entspricht im Wesentlichen der in den Figuren 8 bis 13 gezeigten Getriebegehäuseanordnung 900, sodass im Folgenden lediglich auf Details und/oder Unterschiede eingegangen wird. Die in den Figuren 1 bis 4 dargestellte Achse 100 oder Arbeitsmaschine 10 kann die in Figur 14 dargestellten Getriebegehäuseanordnung 900 umfassen.

Figur 14 zeigt eine schematisch zwei Rahmenelemente 960, insbesondere ein erstes und zweites Rahmenelement 962, 964, der Arbeitsmaschine 10. Die Getriebegehäuseanordnung 900, insbesondere das erste und/oder zweite Gehäusemodul 902, 920, sind an, insbesondere zwischen, den zwei Rahmenelementen 960, insbesondere dem ersten und zweiten Rahmenelement 962, 960, angeordnet. Die Rahmenelemente 960, 962, 964 können an, insbesondere zwischen oder unmittelbar benachbart zu, dem ersten und zweiten Differenzialgetriebe 30, 32 angeordnet sein. Die Rahmenelemente 960, 962, 964 können mit dem ersten und/oder zweiten Differenzialgetriebe 30, 32 verbunden sein. Die Getriebegehäuseanordnung 900, insbesondere das erste und/oder zweite Gehäusemodul 902, 920, sind entlang einer Längsachse 970 der Arbeitsmaschine 10 angeordnet. Die Längsachse 940 der Getriebegehäuseanordnung 900 und die Längsachse 970 der Arbeitsmaschine 10 können identisch oder parallel sein.

## Patentansprüche

1. Antriebsvorrichtung für eine Arbeitsmaschine (10), umfassend
einen Antrieb (52), und
einen Abtrieb (54), und
eine erste und zweite Energiemaschine (50, 56), und
eine erste Übersetzungseinheit (58), wobei die erste Übersetzungseinheit (58) einen ersten und zweiten Eingang (200, 202) und einen ersten und zweiten Ausgang (204, 206) aufweist,
wobei der Antrieb (52) mit dem Abtrieb (54) über die erste Übersetzungseinheit (58) verbindbar ist, **dadurch gekennzeichnet, dass** die erste Energiemaschine (50) mit dem ersten Eingang (200) durch ein erstes Schaltelement (210) verbindbar ist, und die zweite Energiemaschine (56) mit dem zweiten Eingang (202) verbunden ist.

2. Antriebsvorrichtung nach Anspruch 1, **dadurch gekennzeichnet, dass** die erste Übersetzungseinheit (58) ein Planetenkoppelgetriebe (300), insbesondere mit zwei verschiedenen Standübersetzungen, umfasst und/oder die erste Übersetzungseinheit (58) mindestens ein erstes und/oder zweites Planetengetriebe (302, 304) umfasst, wobei die Planetengetriebe (302, 304) miteinander gekoppelt sind.

3. Antriebsvorrichtung nach mindestens einem der vorangehenden Ansprüche, **dadurch gekennzeichnet, dass**:
• der erste Eingang (200) mit einem ersten Hohlrad (306) des ersten Planetengetriebes (302) und einem zweiten Planetenträger (308) des zweiten Planetengetriebes (304) verbindbar oder verbunden ist, und/oder
• der zweite Eingang (202) mit einem ersten Sonnenrad des ersten Planetengetriebes (302) verbunden ist, und/oder
• der erste Ausgang (204) mit einem ersten Planetenträger des ersten Planetengetriebes (302) und/oder einem zweiten Hohlrad des zweiten Planetengetriebes (304) verbindbar oder verbunden ist, und/oder
• der zweite Ausgang (206) mit der zweiten Sonne des zweiten Planetengetriebes (304) verbunden ist.

4. Antriebsvorrichtung nach mindestens einem der vorangehenden Ansprüche, **dadurch gekennzeichnet, dass** die erste Energiemaschine (50) als ein erster Elektromotor und die zweite Energiemaschine (56) als ein zweiter Elektromotor ausgebildet sind oder die erste Energiemaschine (50) und die zweite Energiemaschine (56) als Hydrostat ausgebildet sind.

5. Antriebsvorrichtung nach mindestens einem der vorangehenden Ansprüche, **dadurch gekennzeichnet, dass** die Antriebsvorrichtung (20) eine zweite Übersetzungseinheit (212) umfasst, und die zweite Übersetzungseinheit (212) eine erste Stirnradstufe (320) und/oder eine zweite Stirnradstufe (500) und/oder ein Planetengetriebe, insbesondere ein drittes Planetengetriebe (600), und mindestens ein zweites und drittes Schaltelement (324, 326) umfasst und/oder die zweite Übersetzungseinheit (212) zwei Eingänge und mindestens einen dritten Ausgang (218) aufweist.

6. Antriebsvorrichtung (20) nach mindestens einem der vorangehenden Ansprüche, **dadurch gekennzeichnet, dass** die zweite Übersetzungseinheit (212) im Leistungsfluss nach der ersten Übersetzungseinheit (58) angeordnet ist.

7. Antriebsvorrichtung nach mindestens einem der vorangehenden Ansprüche, **dadurch gekennzeichnet, dass** die Antriebsvorrichtung (20) eine Leistungselektronik (70) umfasst.

8. Antriebsvorrichtung nach mindestens einem der vorangehenden Ansprüche, **dadurch gekennzeichnet, dass** die erste und/oder zweite Übersetzungseinheit (58, 212) einen Durchgang (224) für den Antrieb (52) aufweisen.

9. Antriebsvorrichtung nach mindestens einem der vorangehenden Ansprüche, **dadurch gekennzeichnet, dass** die erste Energiemaschine (50) mit einem ersten Leistungsausgang (46) verbindbar oder verbunden ist.

10. Antriebsvorrichtung nach mindestens einem der vorangehenden Ansprüche, **dadurch gekennzeichnet, dass** der Abtrieb (54) und/oder die erste Übersetzungseinheit (58) mit einer Vorgelegewelle (228) verbindbar oder verbunden ist.

11. Antriebsvorrichtung nach mindestens einem der vorangehenden Ansprüche, **dadurch gekennzeichnet, dass** die Antriebsvorrichtung (20) eine Steuereinheit (42) umfasst.

12. Achse mit einer Antriebsvorrichtung nach Anspruch 1 bis 11.

13. Getriebegehäuseanordnung mit einer Antriebsvorrichtung nach einem der Ansprüche 1 bis 11, **dadurch gekennzeichnet, dass** die Getriebegehäuseanordnung (900) ein erstes Gehäusemodul (902) mit der ersten Übersetzungseinheit (58) umfasst, wobei das erste Gehäusemodul (902) eine eingangsseitige Gehäusewand (904) und eine ausgangsseitigen Gehäusewand (906) aufweist, und die eingangsseitige Gehäusewand (904) des ersten Gehäusemoduls (902) mindestens eine erste Eingangsöffnung (908) aufweist, und die ausgangsseitige Gehäusewand (906) des ersten Gehäusemoduls (902) eine erste Ausgangsöffnung (912) aufweist und/oder die Getriebegehäuseanordnung (900) ein zweites Gehäusemodul (920) mit der zweiten Übersetzungseinheit (212) umfasst, wobei das zweite Gehäusemodul (920) eine eingangsseitige Gehäusewand (922) und eine ausgangsseitigen Gehäusewand (924) aufweist, und die eingangsseitige Gehäusewand (922) des zweiten Gehäusemoduls (920) mindestens eine weitere Eingangsöffnung (926) aufweist, und die ausgangsseitige Gehäusewand (924) des zweiten Gehäusemoduls (920) mindestens eine weitere Ausgangsöffnung (928) aufweist.

14. Arbeitsmaschine mit einer Antriebsvorrichtung (20) nach Anspruch 1 bis 11 oder mit einer Achse (100) nach Anspruch 12 oder mit einer Getriebegehäuseanordnung (900) nach Anspruch 13.

15. Arbeitsmaschine nach Anspruch 14, **dadurch gekennzeichnet, dass** die Arbeitsmaschine (10) zwei Rahmenelemente (960, 962, 964) umfasst, wobei die Antriebsvorrichtung (20), insbesondere die Getriebegehäuseanordnung (900), zumindest teilweise an den Rahmenelementen (960, 962, 964) angeordnet ist.
